(19) **Europäisches Patentamt / European Patent Office / Office européen des brevets**

(11) **EP 4 600 895 A1**

(12) **EUROPEAN PATENT APPLICATION**
published in accordance with Art. 153(4) EPC

(43) Date of publication:
**13.08.2025  Bulletin 2025/33**

(21) Application number: **23886149.6**

(22) Date of filing: **27.10.2023**

(51) International Patent Classification (IPC):
*G06T 5/00* (2024.01)    *G06T 5/20* (2006.01)
*G06T 7/20* (2017.01)    *G06T 3/00* (2024.01)
*G06T 7/11* (2017.01)    *G06N 3/045* (2023.01)
*G06N 3/0455* (2023.01)   *G06T 7/215* (2017.01)

(52) Cooperative Patent Classification (CPC):
**G06T 7/215; G06N 3/045; G06N 3/0455;**
**G06T 3/00; G06T 3/147; G06T 5/00; G06T 5/20;**
**G06T 5/60; G06T 5/77; G06T 7/11; G06T 7/20;**
G06T 2207/10016; G06T 2207/20081;
G06T 2207/20084

(86) International application number:
**PCT/KR2023/016890**

(87) International publication number:
**WO 2024/096453 (10.05.2024 Gazette 2024/19)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **01.11.2022  KR 20220143949**
**06.04.2023  KR 20230045503**

(71) Applicant: **Samsung Electronics Co., Ltd.**
**Suwon-si, Gyeonggi-do 16677 (KR)**

(72) Inventors:
• **KONG, Naejin**
**Suwon-si, Gyeonggi-do 16677 (KR)**
• **GOKA, Harshith**
**Suwon-si, Gyeonggi-do 16677 (KR)**
• **CHO, Hochul**
**Suwon-si, Gyeonggi-do 16677 (KR)**

(74) Representative: **Appleyard Lees IP LLP**
**15 Clare Road**
**Halifax HX1 2HY (GB)**

(54) **ELECTRONIC DEVICE FOR PERFORMING VIDEO INPAINTING AND OPERATION METHOD THEREOF**

(57)    Provided is a method by which an electronic device performs video inpainting. The method of performing video inpainting includes applying a target video in which a target reconstruction area is masked and a mask video that displays the target reconstruction area to an inpainting model including a plurality of first modules configured to perform spatial attention based on a feature obtained from each image of a single frame of the target video and a plurality of second modules configured to perform spatio-temporal attention based on a feature obtained between images of a plurality of frames of the target video, and obtaining a target video including the reconstructed target reconstruction area.

EP 4 600 895 A1

# FIG. 1

## Description

### Technical Field

An electronic device for performing video inpainting for reconstructing a video by filling pixels in a video, and an operating method thereof are provided.

### Background Art

Image inpainting or video inpainting refers to a technique of reconstructing an area of an image or a video, when the area is damaged or deleted.

When performing the image inpainting or the video inpainting, it is important an inpainted part is consistent with a neighboring image or video, a flow naturally transitions, and a reconstruction result is clear and sharp while maintaining consistency therein.

### Disclosure of Invention

### Technical Problem

Embodiments are disclosed to solve the aforementioned problems, and provide an electronic device for performing video inpainting and an operating method thereof.

### Solution to Problem

According to an embodiment of the present disclosure, a method, performed by an electronic device, of performing video inpainting may include applying a target video in which a target reconstruction area is masked and a mask video that displays the target reconstruction area to an inpainting model including a plurality of first modules configured to perform spatial attention based on a feature obtained from each image of a single frame of the target video and a plurality of second modules configured to perform spatio-temporal attention based on a feature obtained between images of a plurality of frames of the target video, and obtaining a target video including the reconstructed target reconstruction area. In an embodiment, the inpainting model may be an artificial intelligence model that has completed first training with respect to the plurality of first modules before the first training and the plurality of second modules configured to perform spatial attention on a single training image before the first training, and second training on the plurality of first modules on which the first training is performed and the plurality of second modules on which the first training is performed. In an embodiment, the first training may include training to obtain a single training image including a reconstructed first reconstruction area based on a single training image including the first reconstruction area. In an embodiment, the second training may include training to obtain a training video in which a reconstructed second reconstruction area is based on a training video including the second reconstruction area.

According to an embodiment of the present disclosure, an electronic device for performing video inpainting may include a memory storing one or more instructions, and at least one processor configured to execute the one or more instructions stored in the memory. In an embodiment, the at least one processor may be configured to apply a target video in which a target reconstruction area is masked and a mask video that displays the target reconstruction area to an inpainting model including a plurality of first modules configured to perform spatial attention based on a feature obtained from each image of a single frame of the target video and a plurality of second modules configured to perform spatio-temporal attention based on a feature obtained between images of a plurality of frames of the target video, and obtain a target video including the reconstructed target reconstruction area. In an embodiment, the inpainting model may be an artificial intelligence model that has completed first training with respect to the plurality of first modules before the first training and the plurality of second modules configured to perform spatial attention on a single training image before the first training, and second training on the plurality of first modules on which the first training is performed and the plurality of second modules on which the first training is performed. In an embodiment, the first training may include training to obtain a single training image including a first reconstruction area reconstructed based on a single training image including the first reconstruction area. In an embodiment, the second training may include training to obtain a training video in which a second reconstruction area is reconstructed based on a training video including the second reconstruction area.

According to an embodiment of the present disclosure, provided is a computer-readable recording medium having recorded thereon a program for performing, on a computer, at least one method among disclosed methods of performing video inpainting.

**Brief Description of Drawings**

FIG. 1 is a diagram for describing a method by which an electronic device performs video inpainting, according to an embodiment of the present disclosure.

FIG. 2 is a flowchart for describing an algorithm of an inpainting model, according to an embodiment of the present disclosure.

FIG. 3 is a diagram for describing an inpainting model on which factorized learning is performed, according to an embodiment of the present disclosure.

FIGS. 4A and 4B are diagrams for describing a structure of an inpainting model according to an embodiment of the present disclosure.

FIGS. 5A and 5B are diagrams for describing an operation of a tokenization module and a de-tokenization module, according to an embodiment of the present disclosure.

FIG. 6 is a diagram for describing an operation of a second module that performs temporal attention, according to an embodiment of the present disclosure.

FIG. 7 is a diagram for describing an operation of a first module that performs spatial attention, according to an embodiment of the present disclosure.

FIGS. 8A and 8B are diagrams for describing an operation of a motion clue fusion module according to an embodiment of the present disclosure.

FIGS. 9A, 9B, and 9C are diagrams for describing a method by which an electronic device performs training of an inpainting model, based on a first loss function, according to an embodiment of the present disclosure.

FIG. 10 is a flowchart for describing a method by which an electronic device performs training of an inpainting model, based on a second loss function, according to an embodiment of the present disclosure.

FIGS. 11A, 11B, and 11C are diagrams for describing training of an inpainting model by using a plurality of decoders, according to an embodiment of the present disclosure.

FIG. 12 is a flowchart for describing a method of training an inpainting model, according to an embodiment of the present disclosure.

FIGS. 13A and 13B are flowcharts for describing an inferring procedure using an inpainting model, according to an embodiment of the present disclosure.

FIG. 14 is a flowchart for describing a method by which an electronic device performs image inpainting, according to an embodiment of the present disclosure.

FIG. 15 is a flowchart for describing a method by which an electronic device performs image inpainting, according to an embodiment of the present disclosure.

FIG. 16 is a flowchart for describing a method by which an electronic device performs image inpainting, according to an embodiment of the present disclosure.

FIG. 17 is a flowchart for describing a method by which an electronic device performs image inpainting on a metaverse, according to an embodiment of the present disclosure.

FIG. 18 is a flowchart for describing a configuration of an electronic device according to an embodiment of the present disclosure.

**Mode for the Invention**

Throughout the present disclosure, the expression "at least one of a, b or c" indicates only a, only b, only c, both a and b, both a and c, both b and c, all of a, b, and c, or variations thereof.

Although the terms used in the present disclosure are selected from among common terms that are currently widely used in consideration of their functions in the present disclosure, the terms may vary according the intention of one of ordinary skill in the art, a precedent, or the advent of new technology. Also, in particular cases, the terms are discretionally selected by the applicant, and the meaning of those terms will be described in detail in the corresponding part of the detailed description. Therefore, the terms used in the present disclosure are not merely designations of the terms, but the terms are defined based on the meaning of the terms and content throughout the present disclosure.

As used herein, the singular forms may include the plural forms as well, unless the context clearly indicates otherwise. Unless otherwise defined, all terms including technical or scientific terms used herein may have the same meanings as commonly understood by one of ordinary skill in the art of the present disclosure. While terms as "first," "second," etc. used in the present specification may be used to describe various elements, the elements must not be limited to the above terms. The above terms are used only to distinguish one element from another.

Throughout the specification, when a part "includes" or "comprises" an element, unless there is a particular description contrary thereto, the part can further include other elements, not excluding the other elements. Also, the terms such as "... unit," "module," or the like used in the specification indicate a unit, which processes at least one function or operation, and the unit may be implemented by hardware or software, or by a combination of hardware and software.

In the present specification, 'image inpainting', 'video inpainting', and 'inpainting' may indicate that pixels of a target reconstruction area included in a target image are changed to pixels of which visual features are naturally blended with neighboring areas of a reconstruction area. According to embodiments to be described below, by performing inpainting, an electronic device may reconstruct the target reconstruction area and may obtain a target video including the reconstructed target reconstruction area.

In the present specification, a 'reconstruction area' may indicate an area on which reconstruction is performed by applying a video inpainting algorithm according to embodiments to be described below. The reconstruction area may indicate an area corresponding to a particular object in a video or may indicate an area on which masking displayed with the video is performed, but the present disclosure is not limited thereto.

Hereinafter, an embodiment of the present disclosure will be described in detail with reference to the accompanying drawings to allow one of skill in the art to easily implement the embodiment. However, the present disclosure may be embodied in many different forms and should not be construed as being limited to an embodiment set forth herein. In addition, in the drawings, parts irrelevant to the description are omitted to clearly describe the present disclosure, and like elements are denoted by like reference numerals throughout the specification. Also, reference numerals used in each drawing are only for descriptions of each drawing, and different reference numerals used in different drawings do not indicate different elements. Hereinafter, the present disclosure will be described in detail with reference to the drawings.

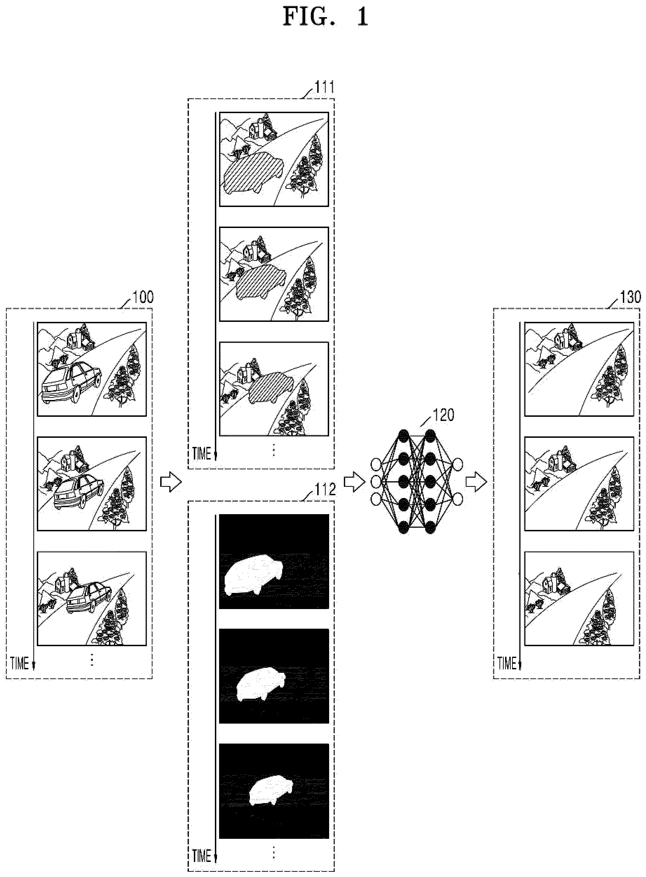

FIG. 1 is a diagram for describing a method by which an electronic device performs video inpainting according to an embodiment of the present disclosure.

Referring to FIG. 1, a target video 100 on which video inpainting is performed may be input to the electronic device. The target video 100 may be configured as an image of a plurality of frames including a target reconstruction area on which video inpainting is performed. For example, the image of the plurality of frames of the target video 100 may include a vehicle that is a target reconstruction area on which video inpainting is performed.

**In** an embodiment, the electronic device may generate a target video 111 in which a target reconstruction area is masked and a mask video 112 that displays a reconstruction area, based on the input target video 100. **The** target video 111 in which the target reconstruction area is masked may indicate a video of the target video 100, in which pixels of the vehicle that is the target reconstruction area are filled with values of 0 or 1. **The** mask video 112 that displays the reconstruction area may indicate a video of the target video 100, in which the pixels of the vehicle that is the target reconstruction area are filled with the value of 0 and pixels of another area excluding the vehicle that is the target reconstruction area are filled with the value of 1, or in the opposite way, the pixels of the target reconstruction area are filled with the value of 1 and the pixels of other area excluding the vehicle that is the target reconstruction area are filled with the value of 0.

**In** an embodiment, the electronic device may obtain a target video 130 including the reconstructed target reconstruction area, by applying, to an inpainting model 120, the target video 111 in which the target reconstruction area is masked and the mask video 112 that displays the reconstruction area. For example, the target video 130 including the reconstructed target reconstruction area may indicate a video in which a background or an object which was occluded by the vehicle is filled, instead of the vehicle, in an area in which the vehicle that is the target reconstruction area was displayed in the target video 100.

In an embodiment, the inpainting model 120 may include a plurality of first modules for performing spatial attention based on a feature obtained from each image of a single frame of a target video and a plurality of second modules for performing spatio-temporal attention that is feature spatial inpainting based on a feature obtained between images of a plurality of frames of the target video. In an embodiment, the plurality of first modules may be referred to as spatial attention modules for performing spatial attention, in that the plurality of first modules perform spatial attention limited to a feature area derived from one frame image. Also, the plurality of second modules may be referred to as spatio-temporal attention modules for performing spatio-temporal attention, in that the plurality of second modules perform a combination of temporal (inter-frame) attention and spatial (in-frame) attention on all feature areas derived from images of a plurality of frames of a video. In order to simplify description and emphasize a spatio-temporal characteristic, the plurality of second modules may be simply referred to as temporal attention modules for performing temporal attention.

In an embodiment, the inpainting model may perform inpainting on a target reconstruction area so as to maintain spatial consistency of an image including the target reconstruction area, by using at least one of the plurality of first modules. That the spatial consistency is maintained may indicate that inpainting is performed such that the target reconstruction area on which reconstruction is performed matches a context in the image. In other words, the inpainting model may convert pixels of the target reconstruction area to have a similar value (e.g.: color, texture, etc.) to neighboring pixels, by performing spatial attention multiple times, such that the reconstructed target reconstruction area does not include an unnatural boundary or patch.

In an embodiment, the inpainting model may perform inpainting on the target reconstruction area to maintain spatial consistency together with temporal consistency, by using at least one of the plurality of second modules. That the temporal consistency is maintained may indicate that inpainting is performed such that the target reconstruction area on which reconstruction is performed matches a motion that occurs between images of neighboring frames. In other words, the inpainting model may convert, by performing temporal attention, pixels of the target reconstruction area to match a pattern of the motion that occurs between the images of the neighboring frames, such that a motion of the reconstructed target reconstruction area may not look unnatural.

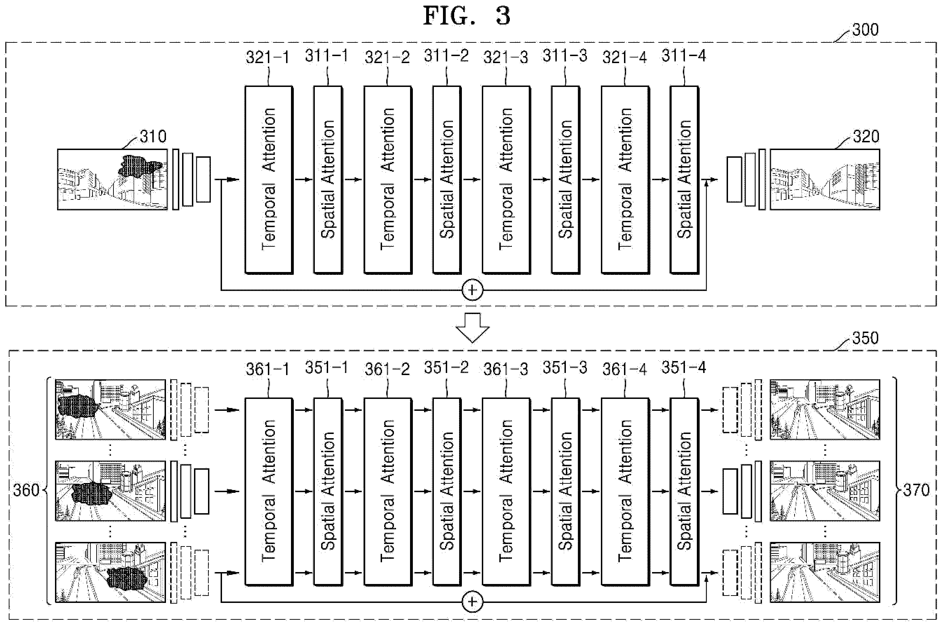

In an embodiment, the inpainting model 120 may be an artificial intelligence model on which factorized learning is performed. The factorized training may indicate a training scheme by which some or all of a plurality of modules included in a model are separated, an operation range of the model is individually trained to be limited to a single training image, some separated modules that have been individually trained are combined with another module or copied as a whole to configure a reconfigured model, and the reconfigured model is re-trained by extending an operation range of the reconfigured model to a training video, such that a final model is configured. In an embodiment, via the factorized training, the inpainting model may be optimized to allow the plurality of first models and the plurality of second modules to perform spatial attention well and may be optimized again to allow the plurality of spatially optimized second models to perform temporal attention well. Later below, the factorized training of the inpainting model will be described in detail with reference to FIG. 3.

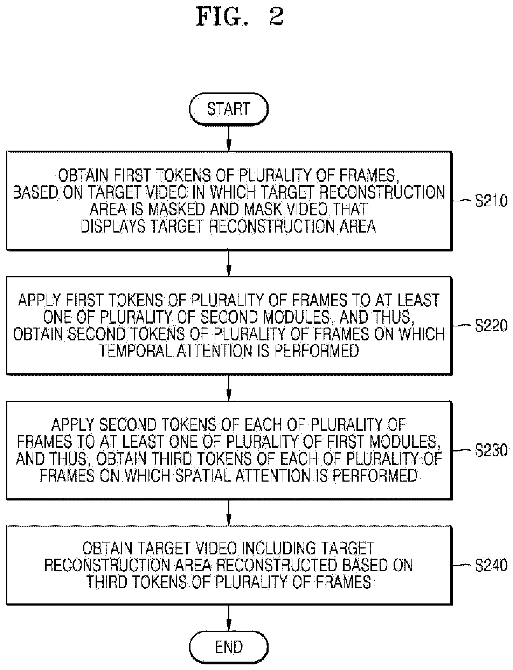

FIG. 2 is a flowchart for describing an algorithm of an inpainting model according to an embodiment of the present disclosure. An operation of an electronic device which is described below may be understood as being performed by the inpainting model included in the electronic device. Also, it may be understood that an operation of the inpainting model is performed by the electronic device.

In operation S210, the electronic device obtains first tokens of a plurality of frames, based on a target video in which a target reconstruction area is masked and a mask video that displays the target reconstruction area.

In an embodiment, the electronic device may identify the target reconstruction area, based on the target video input to the electronic device, and may obtain the identified target reconstruction area and the target video in which the target reconstruction area is masked by changing pixel values of other areas excluding the target reconstruction area and the mask video displaying the target reconstruction area.

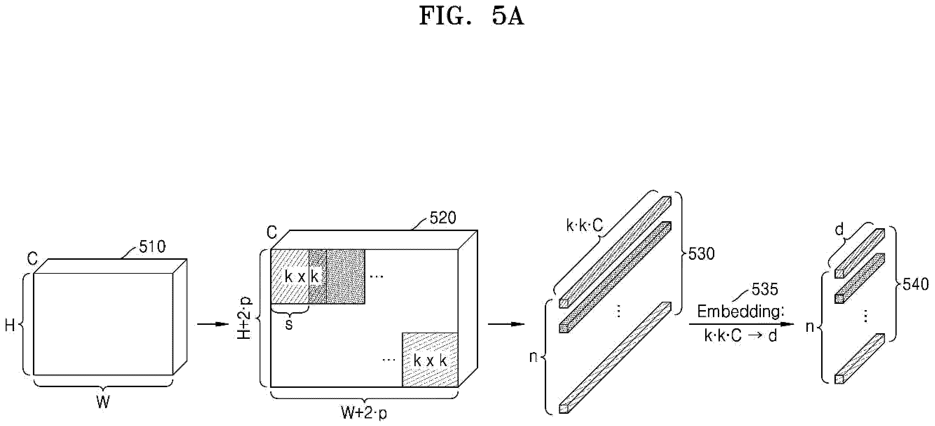

In an embodiment, the electronic device may obtain a feature map of each of the plurality of frames, based on the target video in which the target reconstruction area is masked and each image of the plurality of frames of the mask video that displays the target reconstruction area. The electronic device may obtain first tokens of each of the plurality of frames by performing tokenization on the obtained feature map of each of the plurality of frames, and an operation in which the electronic device performs tokenization will be described in detail below with reference to FIG. 5A.

In operation S220, the electronic device applies the first tokens of the plurality of frames to at least one of a plurality of second modules, and thus, obtains second tokens of the plurality of frames on which temporal attention is performed. In an embodiment, the electronic device may apply the first tokens of the plurality of frames to at least one of a plurality of first modules and the plurality of second modules positioned before a second module that generates the second tokens in the inpainting model, and thus, may obtain tokens of the plurality of frames on which at least one of spatial attention and temporal attention is performed with respect to the first tokens of the plurality of frames. In an embodiment, the electronic device may apply the obtained tokens of the plurality of frames to a first module that generates the second tokens, and thus, may obtain the second tokens of the plurality of frames on which spatial attention is performed.

In operation S230, the electronic device may apply the second tokens of each of the plurality of frames to at least one of the plurality of first modules, and thus, may obtain third tokens of each of the plurality of frames on which spatial attention is performed. In an embodiment, the electronic device may apply the second tokens of the plurality of frames to at least one of the plurality of first modules and the plurality of second modules positioned before a second module that generates the third tokens in the inpainting model, and thus, may obtain tokens of the plurality of frames on which at least one of spatial attention and temporal attention is performed with respect to the second tokens of the plurality of frames. In an embodiment, the electronic device may apply each of the obtained tokens of the plurality of frames to a second module that generates the third tokens, and thus, may obtain the third tokens of each of the plurality of frames on which temporal attention is performed.

In an embodiment, the inpainting model may include a plurality of third modules for extracting a feature obtained between images of neighboring frames of the plurality of frames. In an embodiment, the electronic device may apply the second tokens of the plurality of frames to at least one of a plurality of third modules, and thus, may obtain first feature maps of the plurality of frames including information about a motion existing between the images of the neighboring frames. In an embodiment, the electronic device may apply the second tokens of each of the plurality of frames and the first feature map of each of the plurality of frames to at least one of the plurality of first modules, and thus, may obtain the third tokens of each of the plurality of frames.

In an embodiment, the electronic device may obtain first feature maps of a first frame among the first feature maps of the plurality of frames, based on second tokens of the first frame and second tokens of a second frame that is a next frame of the first frame among the second tokens of the plurality of frames. In an embodiment, the electronic device may obtain third tokens of the first frame among the third tokens of the plurality of frames, based on at least one of first tokens of the first frame and the first feature map of the first frame.

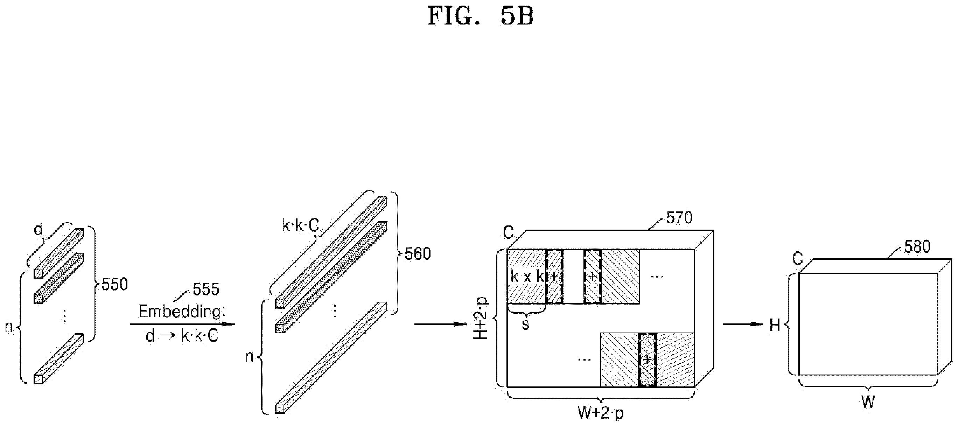

In operation S240, the electronic device obtains the target video including the target reconstruction area reconstructed based on the third tokens of the plurality of frames. In an embodiment, the electronic device may obtain a feature map of each of the plurality of frames by performing de-tokenization on the third tokens of each of the plurality of frames. In an embodiment, the electronic device may obtain an image of each of the plurality of frames of the target video including the target reconstruction area reconstructed based on the obtained feature map of each of the plurality of frames. An operation in which the electronic device performs de-tokenization will be described in detail later below with reference to FIG. 5B.

FIG. 3 is a diagram for describing an inpainting model on which factorized training is performed according to an embodiment of the present disclosure.

In an embodiment, the inpainting model may perform first training 300 with respect to a plurality of first modules 311-1, 311-2, 311-3, and 311-4 before the first training 300 and a plurality of second modules 321-1, 321-2, 321-3, and 321-4 configured to perform spatial attention on a single training image before the first training 300. In an embodiment, the inpainting model may perform the first training 300 by limiting an operation of the model to a single training image. That the first training 300 is performed by limiting the operation of the model to the single training image may indicate that the plurality of first modules 311-1, 311-2, 311-3, and 311-4 and the plurality of second modules 321-1, 321-2, 321-3, and 321-4 are trained to perform spatial attention based on a feature obtained from each image of a single frame.

In an embodiment, second training 350 may be performed on a plurality of first modules 351-1, 351-2, 351-3, and 351-4 on which the first training 300 is performed and a plurality of second modules 361-1, 361-2, 361-3, and 361-4 on which the first training 300 is performed. In an embodiment, the inpainting model may perform the second training 350 by extending the operation of the model to a training video. That the second training 350 is performed by extending the operation of the model to the training video may indicate that the plurality of first modules 351-1, 351-2, 351-3, and 351-4 are trained to perform spatial attention based on a feature obtained from each of images of a plurality of frames included in the training video, and the plurality of second modules 361-1, 361-2, 361-3, and 361-4 are trained to perform spatio-temporal attention based on a feature obtained between the images of the plurality of frames included in the training video.

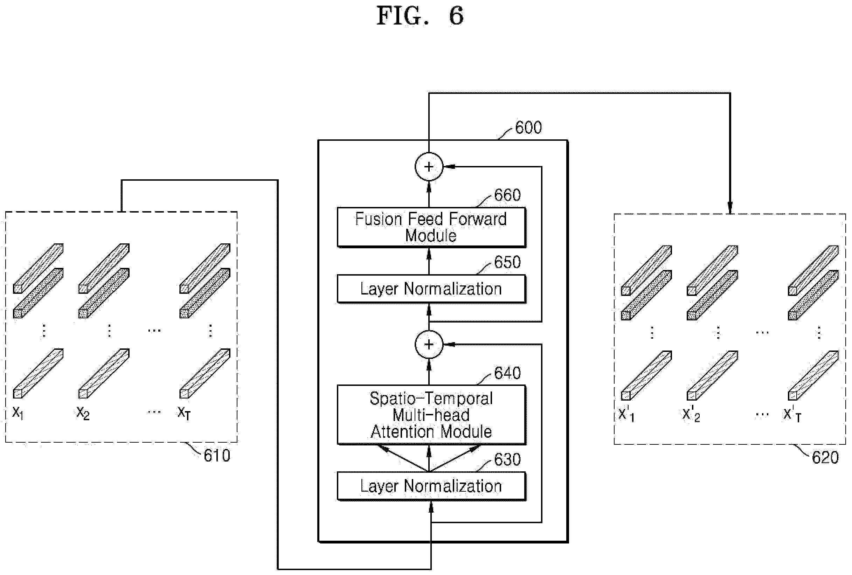

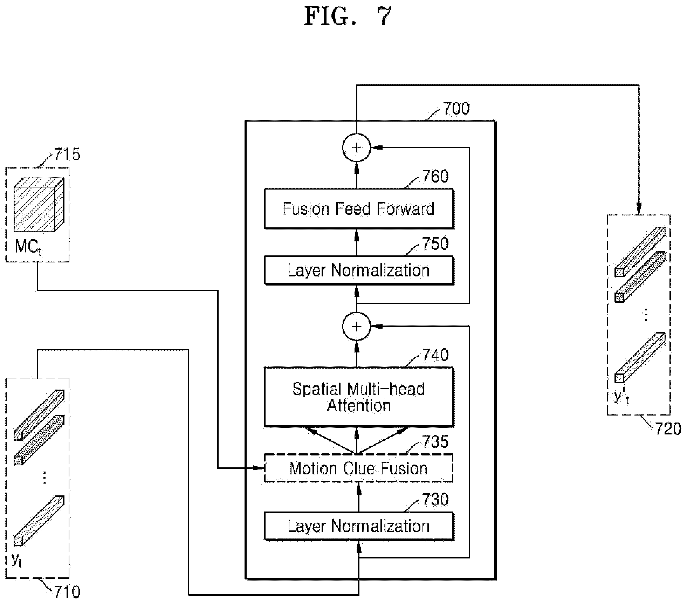

In other words, the electronic device may first perform the first training 300 on the plurality of first modules 311-1, 311-2, 311-3, and 311-4 and the plurality of second modules 321-1, 321-2, 321-3, and 321-4 before the first training 300, and may perform the second training 350 on the plurality of first modules 351-1, 351-2, 351-3, and 351-4 and the plurality of second modules 361-1, 361-2, 361-3, and 361-4 on which the first training 300 is performed. In this case, the plurality of second modules 321-1, 321-2, 321-3, and 321-4 on which the first training 300 is performed are structurally equal to the plurality of second modules 361-1, 361-2, 361-3, and 361-4 on which the second training 350 is performed, but, as an operation of the plurality of second modules 321-1, 321-2, 321-3, and 321-4 on which the first training 300 is performed is limited to perform spatial attention based on a feature obtained from a single training image, the plurality of second modules 321-1, 321-2, 321-3, and 321-4 actually operate in an same manner as the plurality of first modules 311-1, 311-2, 311-3, and 311-4. On the other hand, as the plurality of second modules 361-1, 361-2, 361-3, and 361-4 on which the second training 350 is performed perform spatio-temporal attention based on a feature obtained between images of a plurality of frames included in the training video, the plurality of second modules 361-1, 361-2, 361-3, and 361-4 may operate differently from the plurality of first modules 351-1, 351-2, 351-3, and 351-4 on which spatial attention is performed based on a feature obtained from each of images of a plurality of frames included in the training video. This will be described in detail later below with reference to FIGS. 6 and 7.

In an embodiment, the first training 300 may be training to obtain a single training image 320 including a reconstructed first reconstruction area based on a single training image 310 including the first reconstruction area. In an embodiment, the single training image 310 including the first reconstruction area may include a training image in which the first reconstruction area is masked and a training mask or a training mask map which displays the first reconstruction area.

In an embodiment, neural network parameters of one or more layers included in the plurality of first modules 311-1, 311-2, 311-3, and 311-4 before the first training 300 and the plurality of second modules 321-1, 321-2, 321-3, and 321-4 before the first training 300 may be optimized to perform reconstruction on a reconstruction area included in the single training image 310, based on a feature that the plurality of first modules 311-1, 311-2, 311-3, and 311-4 and the plurality of second modules 321-1, 321-2, 321-3, and 321-4 before the first training 300 obtain from the single training image 310 via the first training 300. Accordingly, the plurality of first modules 311-1, 311-2, 311-3, and 311-4 before the first training 300 and the plurality of second modules 321-1, 321-2, 321-3, and 321-4 before the first training 300 may be optimized via the first training 300 so as to be appropriate for performing image inpainting based on spatial attention.

In an embodiment, the second training 350 may be training to obtain a training video 370 in which a reconstructed second reconstruction area is based on a training video 360 including the second reconstruction area. In an embodiment, the training video 360 including the second reconstruction area may include a training video in which the second reconstruction area is masked and a training mask video that displays the second reconstruction area.

In an embodiment, neural network parameters of one or more layers included in the plurality of first modules 351-1, 351-2, 351-3, and 351-4 and the plurality of second modules 361-1, 361-2, 361-3, and 361-4 before the second training 350 may be optimized via the second training 350 so as to perform reconstruction of a reconstruction area included in the training video 360, based on a feature obtained between images of a plurality of frames included in the training video 360, the feature being obtained by the plurality of first modules 351-1, 351-2, 351-3, and 351-4 on which the first training 300 is performed and the plurality of second modules 361-1, 361-2, 361-3, and 361-4 on which the first training 300 is performed. Accordingly, the plurality of first modules 351-1, 351-2, 351-3, and 351-4 on which the first training 300 is performed and the plurality of second modules 361-1, 361-2, 361-3, and 361-4 on which the first training 300 is performed may be optimized via the second training 350 so as to be appropriate for performing video inpainting based on temporal attention. In this case, the plurality of first modules 351-1, 351-2, 351-3, and 351-4 on which the first training 300 is performed and the plurality of second modules 361-1, 361-2, 361-3, and 361-4 on which the first training 300 is performed may have been already optimized via the first training 300 to perform spatial attention, and thus, may maintain a capability of performing spatial attention even when the second training 350 is performed.

In an embodiment, when the inpainting model includes a plurality of third modules (not shown), the second training 350 may be performed on the plurality of third modules (not shown). In other words, the electronic device may perform the second training 350 on the plurality of first modules 351-1, 351-2, 351-3, and 351-4 on which the first training 300 is performed and the plurality of second modules 361-1, 361-2, 361-3, and 361-4 on which the first training 300 is performed and the plurality of third modules (not shown) before the second training 350.

In an embodiment, the electronic device may calculate a loss function based on a correct image and an image generated by the inpainting model, and may perform training of the inpainting model, based on the calculated loss function. In an embodiment, the loss function may include a generative adversarial network (GAN) loss function (adversarial loss and feature matching loss), and a reconstruction loss function (L1 reconstruction loss and structural similarity index measure (SSIM)-based reconstruction loss). In an embodiment, the electronic device may perform at least one of the first training 300 and the second training 350, based on at least one of the GAN loss function and the reconstruction loss function. In an embodiment, the L1 reconstruction loss and the SSIM-based reconstruction loss may be calculated based on Equations below.

[Equation 1]

$$ L_{Recon-L1} = \frac{1}{T}\sum_{t=1}^{T} \| f(I_{1...T}, M_{1...T})_t - I_t \|_1 $$

[Equation 2]

$$ L_{Recon-SSIM} = 1 - \frac{1}{T}\sum_{t=1}^{T} SSIM(f(I_{1...T}, M_{1...T})_t, I_t) $$

Here, $I_t$ may be a correct image, and may represent a training image not including a first reconstruction area or an image of a particular frame of a training video not including a second reconstruction area. $M_t$ may be a masking image (mask map), and may represent an image or a video which corresponds to the first reconstruction area or the second reconstruction area. $f(I_{1...T}, M_{1...T})_t$ may be an image generated by the inpainting model, and may represent a training image including a reconstructed first reconstruction area or an image of a particular frame of a training video including a reconstructed second reconstruction area.

In an embodiment, the electronic device may perform the second training 350 of the inpainting model, based on at least one of a first loss function and a second loss function. In an embodiment, the electronic device may perform first sub training of the second training 350 based on the first loss function, and may perform second sub training of the second training 350 based on the second loss function. In an embodiment, the electronic device may perform the first sub training and the second sub training in an alternate manner. In an embodiment, the electronic device may not perform the second sub training but may perform only the first sub training.

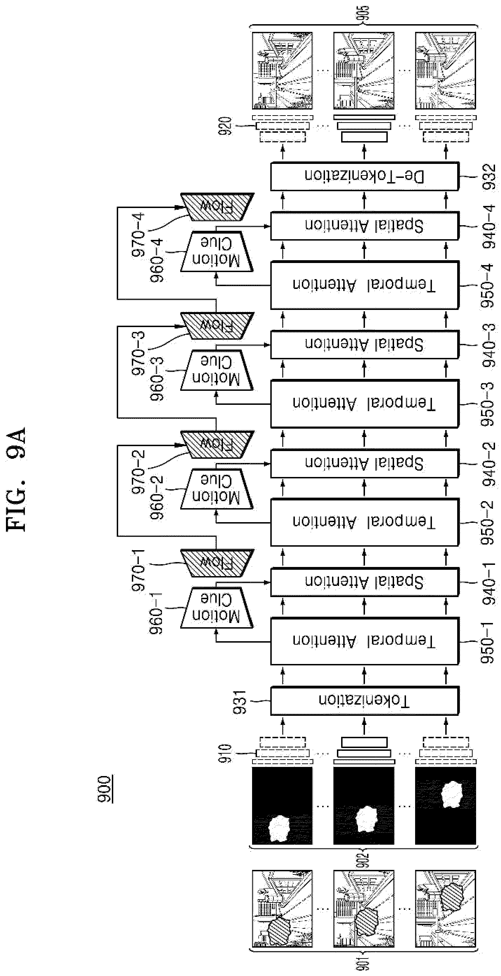

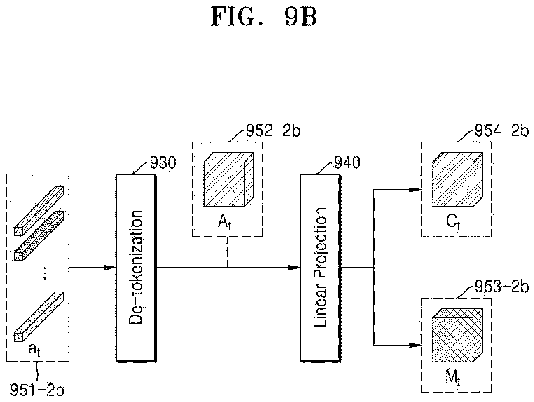

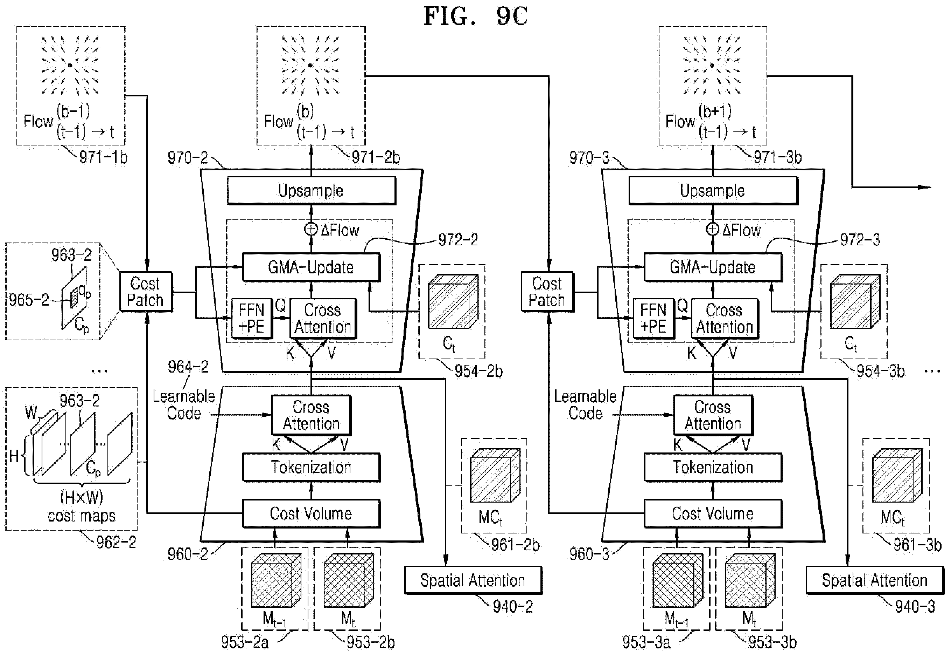

In an embodiment, the first loss function may be calculated based on an optical flow between images of neighboring frames of the training video including the second reconstruction area. The optical flow may include information about a direction and size of movement of the same object or pixels in neighboring frames of a video. In an embodiment, the optical flow may include movement vectors that indicate a movement size and direction of a plurality of pixels in an image. In an embodiment, the second training 350 may be performed on the inpainting model, based on the first loss function, and detailed descriptions thereof will be provided below with reference to FIGS. 9A, 9B, and 9C.

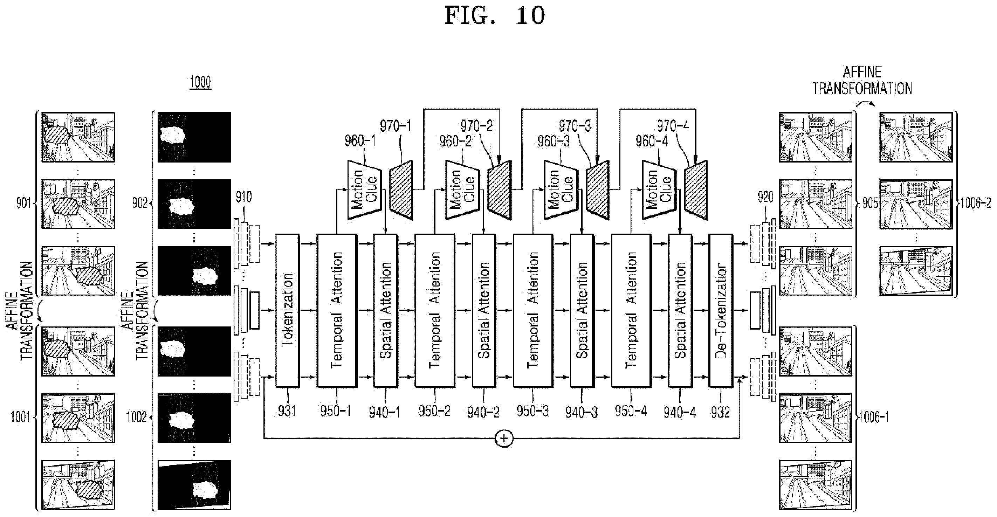

In an embodiment, the second loss function may be calculated based on affine transformation being performed on a training video including a second reconstruction area and a training video including the reconstructed reconstruction area. The affine transformation may indicate linear transformation in a two-dimensional space including movement, rotation, enlargement/reduction, shear, etc. of an object, and a shape of an image of a plurality of frames included in a training video may be changed via the affine transformation. In an embodiment, the second training 350 may be performed on the inpainting model, based on the second loss function, and detailed descriptions thereof will be provided later below with reference to FIG. 10.

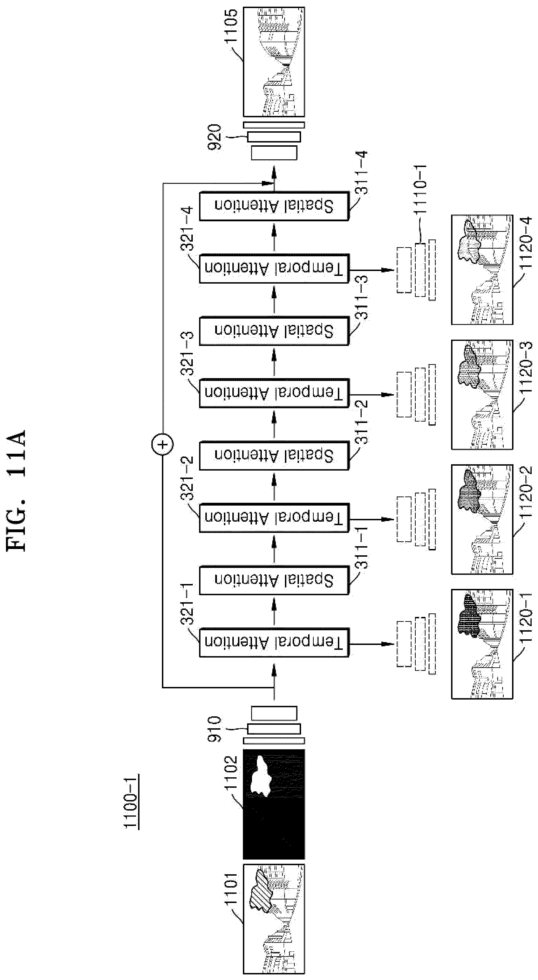

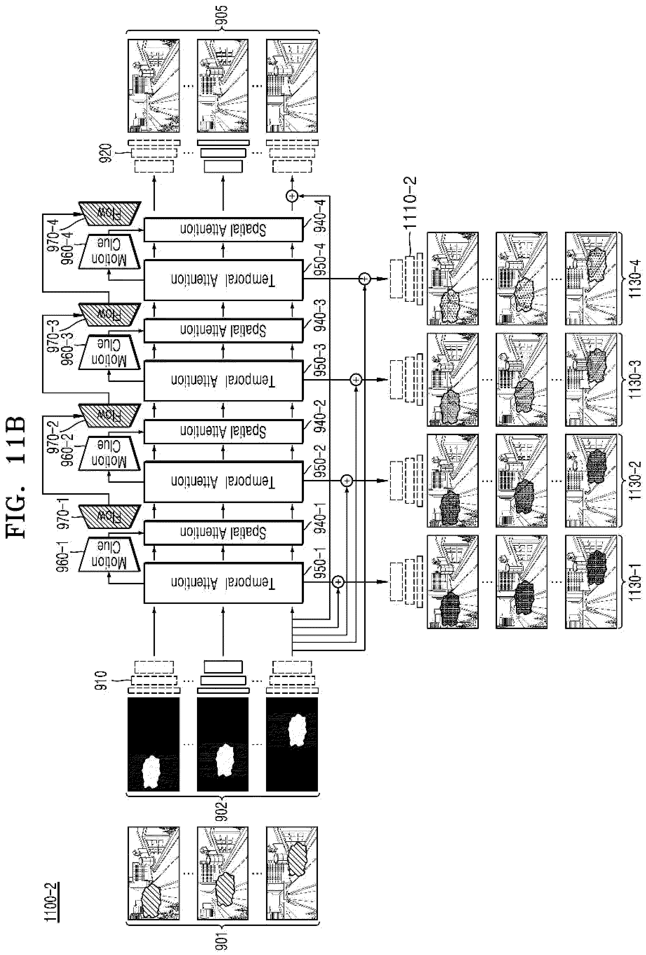

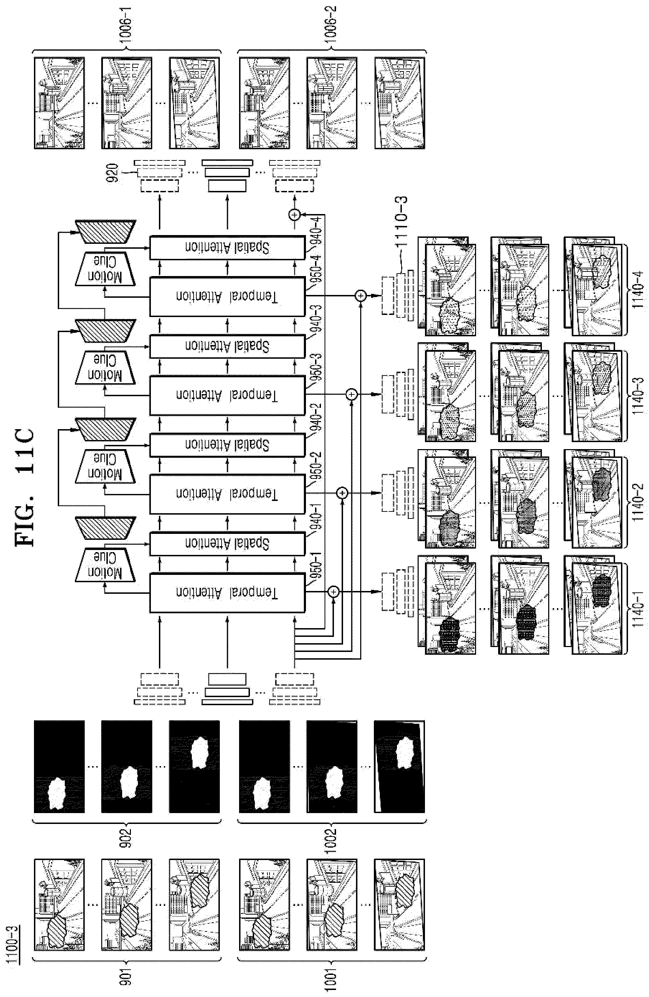

In an embodiment, the electronic device may perform the first training 300 of the inpainting model, based on a single training image including two or more reconstructed first reconstruction areas respectively obtained from one or more of the plurality of first modules 311-1, 311-2, 311-3, and 311-4 before the first training 300 and one or more of the plurality of second modules 321-1, 321-2, 321-3, and 321-4 before the first training 300. In an embodiment, the electronic device may perform the second training 350 of the inpainting model, based on a training video including two or more reconstructed second reconstruction areas respectively obtained from one or more of the plurality of first modules 351-1, 351-2, 351-3, and 351-4 on which the first training 300 is performed and one or more of the plurality of second modules 361-1, 361-2, 361-3, and 361-4 on which the first training 300 is performed. Detailed descriptions thereof will be provided below with reference to FIGS. 11A, 11B, and 11C.

In this manner, the inpainting model according to an embodiment of the present disclosure may be optimized to perform image inpainting, based on factorized training and various loss functions. Accordingly, the electronic device may further naturally and clearly reconstruct a target reconstruction area by using the inpainting model.

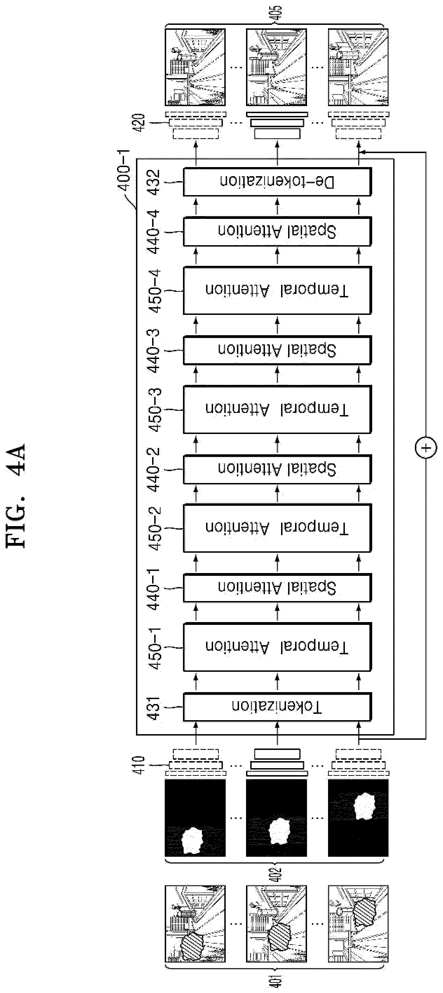

FIG. 4A is a diagram for describing a structure of an inpainting model according to an embodiment of the present disclosure.

Referring to FIG. 4A, the inpainting model may include an encoder 410, a decoder 420, and an attention block 400-1.

In an embodiment, the encoder 410 may output a feature map from an input image in which a reconstruction area is masked and a mask map that displays the reconstruction area. In an embodiment, the electronic device may obtain a feature map of a plurality of frames by applying, to the encoder 410, an image of the plurality of frames of an input video including a masked target reconstruction area and a mask map of the plurality of frames of an input mask video indicating the target reconstruction area. In an embodiment, the encoder 410 may be a model trained to output a feature map by receiving an input of a masked image and a mask map, and neural network parameters of the encoder 410 may be optimized by having performed thereon various trainings disclosed in the present specification.

In an embodiment, the decoder 420 may output an image from the input feature map. In an embodiment, the electronic device may apply, to the decoder 420, a feature map of a plurality of frames of an input video on which inpainting is performed, and thus, may obtain an image of the plurality of frames of an input video 405 including a reconstructed target reconstruction area. In an embodiment, the decoder 420 may be a model trained to output an image by receiving an input of a feature map, and neural network parameters of the decoder 420 may be optimized by having performed thereon various trainings disclosed in the present specification.

In an embodiment, the attention block 400-1 may include a tokenization module 431, a de-tokenization module 432, a plurality of first modules 440-1, 440-2, 440-3, and 440-4, and a plurality of second modules 450-1, 450-2, 450-3, and 450-4.

In an embodiment, the electronic device may obtain tokens of a plurality of frames by applying feature maps of the plurality of frames to the tokenization module 431. The tokenization module 431 may split the feature maps of the plurality of frames into a plurality of patches, and may generate tokens of the plurality of frames, based on the plurality of split patches. The tokens of the plurality of frames which are obtained from the tokenization module 431 may be used in various image and video inpainting algorithms described in the present specification. An operation of the tokenization module 431 will be described in detail below with reference to FIG. 5A.

In an embodiment, the electronic device may obtain the feature maps of the plurality of frames by applying the tokens of the plurality of frames to the de-tokenization module 432. The de-tokenization module 432 may generate the plurality of patches, based on the tokens of the plurality of frames, and may generate the feature maps of the plurality of frames by combining the plurality of generated patches. The feature maps of the plurality of frames which are obtained from the de-tokenization module 432 may be used in various image and video inpainting algorithms described in the present specification. An operation of the de-tokenization module 432 will be described in detail below with reference to FIG. 5A.

In an embodiment, the electronic device may apply tokens of each of the plurality of frames to one of the plurality of first modules 440-1, 440-2, 440-3, and 440-4, and thus, may obtain tokens of each of the plurality of frames on which spatial attention is performed. In an embodiment, the plurality of first modules 440-1, 440-2, 440-3, and 440-4 may perform spatial attention based on tokens of a particular frame among the tokens of the plurality of frames, and may generate tokens of the particular frame corresponding to an image of the particular frame including a reconstruction area reconstructed via spatial attention.

In an embodiment, the electronic device may apply the tokens of the plurality of frames to one of the plurality of second modules 450-1, 450-2, 450-3, and 450-4, and thus, may obtain tokens of the plurality of frames on which spatio-temporal attention is performed. In an embodiment, the plurality of second modules 450-1, 450-2, 450-3, and 450-4 may perform spatio-temporal attention based on the tokens of the plurality of frames, and may generate tokens of the plurality of frames corresponding to an image of the plurality of frames including a reconstruction area reconstructed via the spatio-temporal attention.

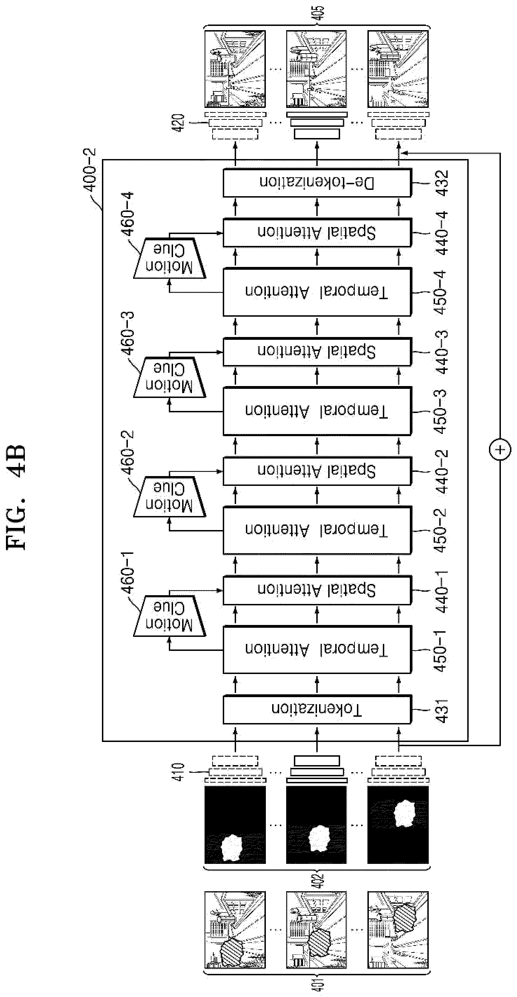

In an embodiment, the attention block 400-1 may have a structure in which the plurality of first modules 440-1, 440-2, 440-3, and 440-4 and the plurality of second modules 450-1, 450-2, 450-3, and 450-4 sequentially overlap and are arranged. **In an** embodiment, the electronic device may repeatedly perform spatial attention and spatio-temporal attention on the tokens of the plurality of frames, by using the attention block 400-1. For example, as in FIG. 4A, the electronic device may perform spatio-temporal attention on tokens of a plurality of frames by applying tokens of a plurality of frames on which spatial attention is performed and which are obtained from one of the plurality of first modules 440-1, 440-2, 440-3, and 440-4 to one of the plurality of second modules 450-1, 450-2, 450-3, and 450-4 which is positioned next to the first module that has performed spatial attention. Also, the electronic device may perform spatial attention on tokens of a plurality of frames by applying the tokens of the plurality of frames on which spatio-temporal attention is performed and which are obtained one of the plurality of second modules 450-1, 450-2, 450-3, and 450-4 to one of the plurality of first modules 440-1, 440-2, 440-3, and 440-4 which is positioned next to the second module that has performed spatio-temporal attention. In an embodiment, the attention block 400-1 may be configured to repeat an order of first applying one of the plurality of first modules 440-1, 440-2, 440-3, and 440-4 and then applying one of the plurality of second modules 450-1, 450-2, 450-3, and 450-4 and then applying next ones. In an embodiment, the attention block 400-1 may be configured to apply only the plurality of second modules 450-1, 450-2, 450-3, and 450-4 without using the plurality of first modules 440-1, 440-2, 440-3, and 440-4 only for a case in which a plurality of third modules 460-1, 460-2, 460-3, and 460-4 described with FIG. 4B do not exist.

In this manner, the electronic device according to an embodiment of the present disclosure may further accurately and clearly perform image inpainting on a target reconstruction area while repeatedly performing spatial attention and temporal attention with respect to a token of a plurality of frames. However, a structure of the attention block 400-1 is not necessarily limited to the aforementioned example, and some of the plurality of first modules 440-1, 440-2, 440-3, and 440-4 and the plurality of second modules 450-1, 450-2, 450-3, and 450-4 which are included in the attention block 400-1 may be omitted or may be configured in a manner different from that of FIG. 4A. For example, some modules among the plurality of first modules 440-1, 440-2, 440-3, and 440-4 and the plurality of second modules 450-1, 450-2, 450-3, and 450-4 of the inpainting model may be omitted or may be differently positioned, based on a hardware resource (e.g.: computing time, amount of power consumption, bandwidth, amount of storage, etc.) of the electronic device, requested inpainting performance, or a user input for setting them.

FIG. 4B is a diagram for describing a structure of an inpainting model according to an embodiment of the present disclosure.

Referring to FIG. 4B, an attention block 400-2 may further include a plurality of third modules 460-1, 460-2, 460-3, and 460-4, compared to the attention block 430-1 of FIG. 4A.

In an embodiment, the plurality of third frames 460-1, 460-2, 460-3, and 460-4 may each be a module for extracting a feature obtained between images of neighboring frames among a plurality of frames of a target video. In an embodiment, a feature extracted by the plurality of third modules 460-1, 460-2, 460-3, and 460-4 may be referred to as a motion clue or a motion clue feature map, and the plurality of third modules 460-1, 460-2, 460-3, and 460-4 may each be referred to as a motion clue estimation module, in that they generate the motion clue.

In an embodiment, the electronic device may apply a token of a plurality of frames to at least one of the plurality of third modules 460-1, 460-2, 460-3, and 460-4, and thus, may obtain a feature map of the plurality of frames which includes information about a motion existing between images of neighboring frames among the plurality of frames. In an embodiment, the plurality of third modules 460-1, 460-2, 460-3, and 460-4 may generate the feature map of the plurality of frames which includes the information about the motion existing between the images of the neighboring frames, based on a token of the neighboring frames. In an embodiment, the motion existing between the images of the neighboring frames may indicate a motion of an object included in the images and/or a change in pixel values which occurs between the images of the neighboring frame due to a motion of a camera capturing the images or a feature obtainable due to the change in the pixel values. An operation of the plurality of third modules 460-1, 460-2, 460-3, and 460-4 will be described in detail below with reference to FIGS. 9A, 9B, and 9C.

In an embodiment, the electronic device may apply, to at least one of the plurality of first modules 440-1, 440-2, 440-3, and 440-4, tokens of each of the plurality of frames on which temporal attention is performed and which are obtained from the plurality of second modules 450-1, 450-2, 450-3, and 450-4 and a feature map of each of the plurality of frames which includes the information about the motion existing between the images of the neighboring frames and which is obtained from the plurality of third modules 460-1, 460-2, 460-3, and 460-4, and thus, may obtain tokens of each of the plurality of frames on which spatial attention is performed. In this case, unlike the attention block 400-1 of FIG. 4A which performs spatial attention based on only tokens of each of the plurality of frames, the plurality of first modules 440-1, 440-2, 440-3, and 440-4 of the attention block 400-2 of FIG. 4B are capable of performing spatial attention in which temporal attention is maintained, by also considering a feature map of each of the plurality of frames which includes the information about the motion existing between the images of the neighboring frames.

In an embodiment, as in FIG. 4B, the plurality of third modules 460-1, 460-2, 460-3, and 460-4 of the inpainting model 400-2 are arranged by being connected in sequence to one of the plurality of first modules 440-1, 440-2, 440-3, and 440-4 and one of the plurality of second modules 450-1, 450-2, 450-3, and 450-4 which sequentially overlap. In an embodiment, the electronic device may repeatedly obtain, by using the attention block 400-2, motion clue feature maps of the plurality of frames which include the information about the motion existing between the images of the neighboring frames, and may repeatedly perform spatial attention, based on the obtained motion clue feature maps of the plurality of frames and tokens of the plurality of frames on which temporal attention is performed. For example, as in FIG. 4B, the electronic device may apply the tokens of the plurality of frames on which temporal attention is performed and which are obtained from one of the plurality of second modules 450-1, 450-2, 450-3, and 450-4 to one of the plurality of third modules 460-1, 460-2, 460-3, and 460-4 connected to a second module that has performed temporal attention, and thus, may repeatedly obtain the motion clue feature maps of the plurality of frames. Also, the electronic device may apply the motion clue feature maps of the plurality of frames which are obtained from one of the plurality of third modules 460-1, 460-2, 460-3, and 460-4 and the tokens of the plurality of frames on which temporal attention is performed and which are obtained from one of the plurality of second modules 450-1, 450-2, 450-3, and 450-4 to one of the plurality of first modules 440-1, 440-2, 440-3, and 440-4 which is positioned next to the second module that has performed temporal attention, and thus, may repeatedly perform spatial attention. However, a structure of the attention block 400-2 is not necessarily limited to the aforementioned example, and some of the plurality of third modules 460-1, 460-2, 460-3, and 460-4 included the attention block 400-2 may be omitted or may be configured in a manner different from that of FIG. 4B. For example, some modules among the plurality of first modules 440-1, 440-2, 440-3, and 440-4, the plurality of second modules 450-1, 450-2, 450-3, and 450-4, and the plurality of third modules 460-1, 460-2, 460-3, and 460-4 of the inpainting model may be omitted or may be differently positioned, based on a hardware resource of the electronic device, requested inpainting performance, or a user input for setting them.

In this manner, the electronic device according to an embodiment of the present disclosure may repeatedly obtain information about a motion existing between images of neighboring frames, at a feature map level, rather than a pixel level, may repeatedly apply the information to tokens of each of the plurality of frames, and thus, may perform spatial attention in which temporal attention is maintained. Accordingly, the electronic device may further accurately and clearly perform video inpainting with respect to a target reconstruction area.

FIG. 5A is a diagram for describing an operation of a tokenization module according to an embodiment of the present disclosure. Referring to FIG. 5A, a feature map 510 on which tokenization is performed may be one of feature maps of a plurality of frames input to the tokenization module 431 disclosed in the present specification.

Referring to FIG. 5A, the tokenization module 431 may obtain a padded feature map 520 by performing padding on the feature map 510 on which tokenization is performed. For example, the tokenization module 431 may obtain the padded feature map 520 having a size of (H + 2p) x (W + 2p) x C by performing padding of p on each of a height and a width with respect to the feature map 510 that has a size of H x W x C and on which tokenization is performed. An area on which padding is performed may be filled with 0 or another random scalar value.

In an embodiment, the tokenization module 431 may split the padded feature map 520 into a plurality of patches, and may convert the plurality of split patches into a plurality of unfold tokens 530. For example, the tokenization module 431 may split the padded feature map 520 having the size of (H + 2p) x (W + 2p) x C to the plurality of patches having a size of k x k x C, and may unfold the plurality of split patches to obtain the plurality of unfold tokens 530 having a length of k x k x C. In an embodiment, the tokenization module 431 may obtain the plurality of unfold tokens 530 by splitting the padded feature map 520 to overlap a plurality of neighboring patches by a preset area. For example, the tokenization module 431 may split the padded feature map 520 into the plurality of neighboring patches having the size of k x k x C by striding them at an s interval. In this case, n that is the number of the plurality of unfold tokens 530 may be calculated as below.

[Equation 3]

$$ \mathrm{n} = \left\lfloor \frac{(H + 2 \cdot p) - k}{s} + 1 \right\rfloor \times \left\lfloor \frac{(W + 2 \cdot p) - k}{s} + 1 \right\rfloor $$

In this manner, the tokenization module 431 may split the padded feature map 520 so as to allow the plurality of patches to overlap each other by a preset area, and thus, may prevent a loss of local information which may occur in a tokenization process.

In an embodiment, the tokenization module 431 may obtain a plurality of tokens 540 by performing first embedding 535 on the plurality of unfold tokens 530. For example, the tokenization module 431 may convert the plurality of unfold tokens 530 having a length of k x k x C into the plurality of tokens 540 having a length of d. In an embodiment, the tokenization module 431 may obtain the plurality of tokens 540 by applying the plurality of unfold tokens 530 to a first embedding layer (not shown). The first embedding layer (not shown) may be a layer trained to receive an input of tokens having a particular length and output a token whose length is decreased, compared to the particular length, and neural network parameters of the first embedding layer (not shown) may be optimized based on various trainings disclosed in the present specification.

In this manner, the tokenization module 431 may obtain tokens of each of a plurality of frames by performing tokenization of a feature map of each of the plurality of frames. In an embodiment, the tokens of the plurality of frames which are obtained via the tokenization module 431 may be used in various algorithms for video inpainting which are disclosed in the present specification. For example, the tokens of the plurality of frames may be applied to a plurality of first modules so that temporal attention may be performed, or the tokens of the plurality of frames may be applied to a plurality of second modules so that spatial attention may be performed, but the present disclosure is not limited to the aforementioned example.

FIG. 5B is a diagram for describing an operation of a de-tokenization module according to an embodiment of the present disclosure. Referring to FIG. 5B, a plurality of tokens 550 on which de-tokenization is performed may be tokens of one frame among tokens of a plurality of frames input to the de-tokenization module 432 disclosed in the present specification.

Referring to FIG. 5B, the de-tokenization module 432 may obtain a plurality of tokens 560 whose length is increased by performing second embedding 555 on the plurality of tokens 550 on which de-tokenization is performed. For example, the de-tokenization module 432 may convert the plurality of tokens 550 on which de-tokenization is performed and which have a length of d via the second embedding 555 to a plurality of tokens 560 whose length is increased to a length of k x k x C. In an embodiment, the de-tokenization module 432 may apply the plurality of tokens 550 on which de-tokenization is performed to a second embedding layer (not shown), and thus, may obtain the plurality of tokens 560 whose length is increased. The second embedding layer (not shown) may be a layer trained to receive an input of tokens having a particular length and output a token whose length is increased, compared to the particular length, and neural network parameters of the second embedding layer (not shown) may be optimized based on various trainings disclosed in the present specification.

In an embodiment, the de-tokenization module 432 may convert the plurality of tokens 560 whose length is increased to a plurality of patches, and may obtain a reconstructed feature map 570 by synthesizing the plurality of converted patches. For example, the de-tokenization module 432 may convert the plurality of tokens 560 whose length is increased and that have a length of k x k x C to the plurality of patches having a size of k x k x C, and may obtain the reconstructed feature map having a size of (H + 2p) x (W + 2p) x C by synthesizing the plurality of converted patches. In an embodiment, the de-tokenization module 432 may synthesize the plurality of converted patches to overlap by s that an interval at which the plurality of patches are stride when the padded feature map 520 is split by the tokenization module 431 to the plurality of neighboring patches that overlap by the preset area. In this case, a value of the area overlapping between the plurality of neighboring patches may be a sum or an average of values of a plurality of patches of the area, but the present disclosure is not limited thereto.

In an embodiment, the de-tokenization module 432 may obtain a feature map 580 by trimming the reconstructed feature map 570. For example, the de-tokenization module 432 may obtain the feature map 580 having a size of H x W x C by performing trimming by p on each of a height and a width of the reconstructed feature map 570 having a size of (H + 2p) x (W + 2p) x C.

In this manner, the de-tokenization module 432 may obtain a feature map of each of a plurality of frames by performing de-tokenization on tokens of each of the plurality of frames. In an embodiment, the feature map of the plurality of frames which is obtained by the de-tokenization module 432 may be used in various image and video inpainting algorithms disclosed in the present specification. For example, the feature map of the plurality of frames may be applied to the decoder 420 so that images of the plurality of frames may be obtained, but the present disclosure is not limited thereto.

FIG. 6 is a diagram for describing an operation of a second module that performs spatio-temporal attention according to an embodiment of the present disclosure.

In an embodiment, the second module that performs spatio-temporal attention of FIG. 6 may be one of the plurality of second modules 450-1, 450-2, 450-3, and 450-4 described in the present specification, and hereinafter, for convenience of descriptions, the second module is referred to as a temporal attention module 600. In an embodiment, the temporal attention module 600 may include a tokenization module (not shown) and de-tokenization module (not shown), and operations of the tokenization module (not shown) and the de-tokenization module (not shown) may correspond to operations of the tokenization module 431 and the de-tokenization module 432 which are described above.

Referring to FIG. 6, the electronic device may apply tokens 610 of a plurality of frames to the temporal attention module 600, and thus, may obtain tokens 620 of the plurality of frames on which spatio-temporal attention is performed.

In an embodiment, a first normalization layer 630 included in the temporal attention module 600 may perform layer normalization on the tokens 610 of the plurality of frames input to the temporal attention module 600. Tokens of the plurality of frames on which layer normalization is performed by the first normalization layer 630 may be embedded again to query tokens, key tokens, and value tokens, and may be input to a spatio-temporal multi-head attention module 640 included in the temporal attention module 600.

In an embodiment, the spatio-temporal multi-head attention module 640 may perform multi-head attention on the query tokens, the key tokens, and the value tokens of the plurality of frames input to the spatio-temporal multi-head attention module 640. The spatio-temporal multi-head attention module 640 may split the input query tokens, the input key tokens, and the input value tokens of the plurality of frames, may input them to each of a plurality of heads, and may extract meaningful features from the input query tokens, the input key tokens, and the input value tokens of the plurality of frames via each of the plurality of heads. The plurality of heads may perform a neural network computation in parallel, and may include neural network parameters optimized to extract meaningful features in different aspects. The spatio-temporal multi-head attention module 640 may re-combine features extracted from each of the plurality of heads, and thus, may generate tokens of the plurality of frames on which spatio-temporal multi-head attention is performed. The tokens of the plurality of frames on which spatio-temporal multi-head attention is performed may be combined with the original tokens 610 of the plurality of frames, and the combination may be input to a second normalization layer 650 included in the temporal attention module 600.

In an embodiment, the second normalization layer 650 may perform layer normalization on the tokens of the plurality of frames input to the second normalization layer 650. The tokens of the plurality of frames on which layer normalization is performed by the second normalization layer may be input to a fusion feed forward module 660 included in the temporal attention module 600.

In an embodiment, the fusion feed forward module 660 may perform a neural network computation on the tokens of the plurality of frames input to the fusion feed forward module 660, according to Equation below.

[Equation 4]

$$p_i = MLP(z_i)\ i \in [1, T \cdot n]$$

$$A_t = SoftComp(p_{t,1}, \dots, p_{t,n})\ t \in [1, T]$$

$$p'_{t,1}, \dots, p'_{t,n} = SoftSplit(A_t)\ t \in [1, T]$$

$$z'_i = MLP(p'_i)\ i \in [1, T \cdot n]$$

Here, $z_i$ may indicate one of the tokens of the plurality of frames input to the fusion feed forward module 660, and $z'_i$ may indicate one of tokens of the plurality of frames which are generated via the fusion feed forward module 640. $T$ may indicate a total number of the plurality of frames, and $n$ may indicate the number of tokens of each frame. An MLP function may indicate a computation performed by multi-layer perceptron included in the fusion feed forward module 660. Also, a SoftComp function may indicate a computation performed by the de-tokenization module included in the fusion feed forward module 660, and a SoftSplit function may indicate a computation performed by the tokenization module included in the fusion feed forward module 660. **In** this manner, as the fusion feed forward module 660 included in the temporal attention module 600 performs a neural network computation on all input tokens of a plurality of frames, and generates all of the tokens of the plurality of frames on which the neural network computation is performed, the temporal attention module 600 may perform spatio-temporal attention on the tokens 610 of the plurality of frames.

In an embodiment, the tokens of the plurality of frames which are obtained from the fusion feed forward module 660 may be combined with tokens of the plurality of frames before being input to the second normalization layer 650, and thus, may be output as the tokens 620 of the plurality of frames on which spatio-temporal attention is performed. **The** tokens 620 of the plurality of frames on which spatio-temporal attention is performed may be used in various algorithms for video inpainting which are disclosed in the present specification. For example, the tokens 620 of the plurality of frames on which spatio-temporal attention is performed may be applied to at least one of a plurality of first modules so that spatial attention may be performed, or the tokens 620 of the plurality of frames on which spatio-temporal attention is performed is applied to at least one of a plurality of third modules so that motion clue feature maps of the plurality of frames which include information about a motion existing between images of a plurality of neighboring frames may be obtained, but the present disclosure is not limited thereto.

In an embodiment, the temporal attention module 600 may perform an operation on a single frame, and thus, may perform spatial attention based on a feature obtained from the single frame, as a spatial attention module 700 to be described below. **In** other words, as the temporal attention module 600 performs spatial attention based on the feature obtained from the single training image when performing the first training 300, the electronic device may apply tokens of a single frame to the temporal attention module 600, and thus, may obtain tokens of the signal frame on which spatial attention is performed.

FIG. 7 is a diagram for describing an operation of a first module that performs spatial attention according to an embodiment of the present disclosure.

In an embodiment, the second module that performs spatial attention of FIG. 7 may be one of the plurality of first modules 440-1, 440-2, 440-3, and 440-4 described in the present specification, and hereinafter, for convenience of descriptions, the second module is referred to as a spatial attention module 700. In an embodiment, the spatial attention module 700 may include a tokenization module (not shown) and de-tokenization module (not shown), and operations of the tokenization module (not shown) and the de-tokenization module (not shown) may correspond to operations of the tokenization module 431 and the de-tokenization module 432 which are described above.

Referring to FIG. 7, the electronic device may apply tokens of each of a plurality of frames to the spatial attention module, and thus, may obtain tokens of each of the plurality of frames on which spatial attention is performed. In other words, $y'_1$ corresponding to tokens of a first frame on which spatial attention is performed based on $y_1$ corresponding to tokens of the first frame may be obtained, $y'_2$ corresponding to tokens of a second frame on which spatial attention is performed based on $y_2$ corresponding to tokens of the second frame may be obtained, and $y'_T$ corresponding to tokens of a frame at a T point in time on which spatial attention is performed based on $y_T$ corresponding to tokens of the frame at the T point in time may be obtained. That is, spatial attention is performed only in each frame, and spatial attention of each frame may not be relevant to spatial attention of another frame. Referring to FIG. 7, it is shown that $y'_t$ 720 corresponding to tokens of a current frame on which spatial attention is performed based on $y_t$ 710 corresponding to tokens of the current frame among a plurality of frames is obtained, however, actually, spatial attention may be simultaneously performed on each of the plurality of frames in a parallel manner. Therefore, hereinafter, an operation of the spatial attention module 700 is described as an operation with respect to each one frame.

In an embodiment, a first normalization layer 730 included in the spatial attention module 700 may perform layer normalization on $y_t$ 710 corresponding to the tokens of the current frame input to the spatial attention module 700. Tokens of a corresponding frame on which layer normalization is performed by the first normalization layer 730 may be input to a motion clue fusion module 735 included in the spatial attention module 700.

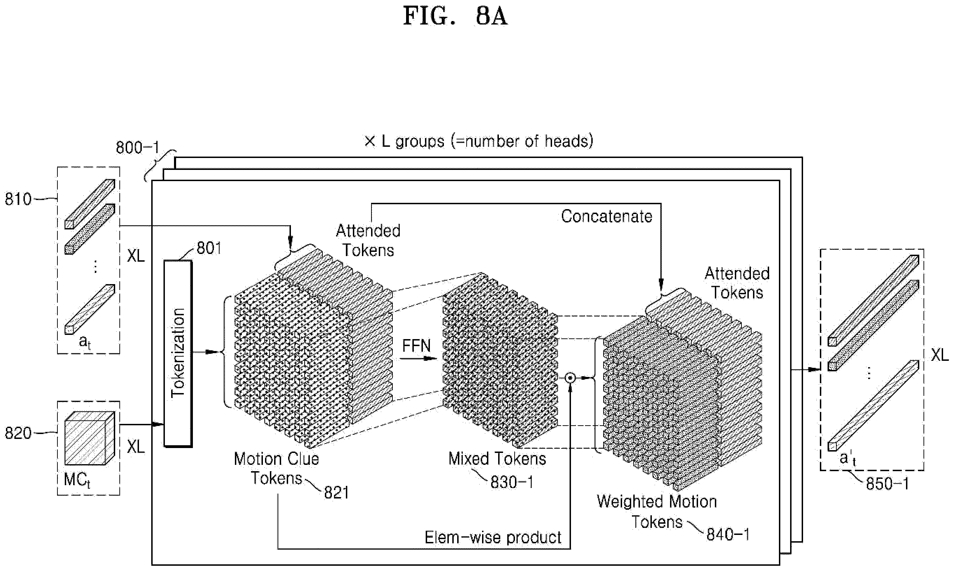

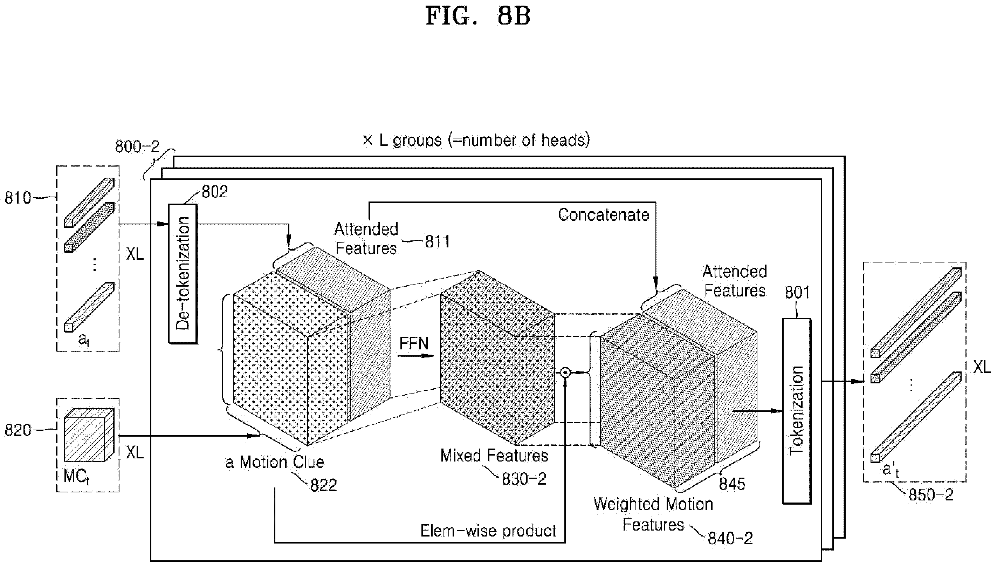

In an embodiment, a motion clue feature map $MC_t$ 715 corresponding to the input tokens $y_t$ 710 of the current frame among motion clue feature maps of a plurality of frames which include information about a motion existing between images of neighboring frames which is obtained from one of the plurality of third modules 460-1, 460-2, 460-3, and 460-4 may be input to the motion clue fusion module 735. In an embodiment, the motion clue fusion module 735 may generate tokens of the current frame which includes information of a feature map level, the information being about a motion existing between the current frame and neighboring frame, based on tokens of the current frame on which layer normalization is performed by the first normalization layer 730 and the motion clue feature map <<img2>> 715 of the current frame. In an embodiment, the tokens of the current frame which are generated by the motion clue fusion module 735 may be embedded again to query tokens, key tokens, and value tokens, and may be input to a spatial multi-head attention module 740. An operation of the motion clue fusion module 735 will be described in detail below with reference to FIGS. 8A and 8B.

In an embodiment, the spatial attention module 700 may not include the motion clue fusion module 735, or even when the spatial attention module 700 includes the motion clue fusion module 735, the spatial attention module 700 may deactivate an operation of the motion clue fusion module 735. In this case, the tokens on which layer normalization is performed by the first normalization layer 730 may not be input to the motion clue fusion module 735 but may be input to the spatial multi-head attention module 740 included in the spatial attention module 700.

In an embodiment, the spatial multi-head attention module 740 may perform multi-head attention on the tokens of the current frame input to the spatial multi-head attention module 740. The spatial multi-head attention module 740 may split the input tokens of the current frame and input them to each of a plurality of heads, and may extract meaningful features from the tokens of the current frame input to each of the plurality of heads. The plurality of heads may perform a neural network computation in parallel, and may include neural network parameters optimized to extract meaningful features in different aspects. The spatial multi-head attention module 740 may re-combine features extracted from each of the plurality of heads, and thus, may generate tokens of the current frame on which spatial multi-head attention is performed. The tokens of the current frame on which spatial multi-head attention is performed may be combined with the original tokens $y_t$ 710 of the current frame, and the combination may be input to a second normalization layer 750 included in the spatial attention module 700.

In an embodiment, the second normalization layer 750 may perform layer normalization on the tokens of the current frame input to the second normalization layer 750. The tokens of the current frame on which layer normalization is performed by the second normalization layer may be input to a fusion feed forward module 760 included in the spatial attention module 700.

In an embodiment, the fusion feed forward module 760 may perform a neural network computation on tokens of a plurality of frames input to the fusion feed forward module 760, according to Equation below.

【Equation 5】

$$p_i = MLP(z_i) \quad i \in [1, n]$$

$$A = SoftComp(p_1, \ldots, p_n)$$

$$p'_1, \ldots, p'_n = SoftSplit(A)$$

$$z'_i = MLP(p'_i) \quad i \in [1, n]$$

Here, $z_i$ may indicate one of the tokens of the current frame input to the fusion feed forward module 760, and $z'_i$ may indicate one of tokens of the current frame which are generated via the fusion feed forward module 760. <<img2>> may indicate the number of tokens of the current frame. An MLP function may indicate a computation performed by multi-layer perceptron included in the fusion feed forward module 760. Also, a SoftComp function may indicate a computation performed by the de-tokenization module (not shown) included in the fusion feed forward module 760, and a SoftSplit function may indicate a computation performed by the tokenization module (not shown) included in the fusion feed forward module 760. In this manner, as the fusion feed forward module 760 included in the spatial attention module 700 is capable of performing a neural network computation on tokens of a particular frame among input tokens of a plurality of frames, and generating tokens of the particular frames on which the neural network computation is performed, the spatial attention module 700 may perform spatial attention with respect to the tokens $z_1$ 710 of the current frame among the plurality of frames on each of the plurality of frames in a simultaneous and parallel manner.

In an embodiment, the tokens of the current frame obtained from the fusion feed forward module 760 may be combined with the tokens of the current frame input to the second normalization layer 750 and may be output as the tokens <<img2>> 720 of the current frame on which spatial attention is performed. The tokens <<img2>> 720 of the current frame on which spatial attention is performed may be used in various algorithms for image or video inpainting which are disclosed in the present specification. For example, tokens of a plurality of frames on which spatial attention is performed may be applied to at least one of a plurality of second modules so that spatio-temporal attention may be performed, but the present disclosure is not limited thereto.

FIGS. 8A and 8B are diagrams for describing an operation of a motion clue fusion module according to an embodiment of the present disclosure. Motion clue fusion modules 800-1 and 800-2 of FIG. 8A may correspond to the motion clue fusion module 735 of FIG. 7.

In an embodiment, the motion clue fusion modules 800-1 and 800-2 of FIGS. 8A and 8B may be configured as a group of a plurality of modules that have L same structures corresponding to the number of a plurality of heads of the spatial multi-head attention module 740 and that perform the same operation, and tokens 850-1 generated by the plurality of modules included in the group may be embedded again to query, key, value tokens for each group and may be respectively input to the plurality of heads of the spatial multi-head attention module 740 which correspond to respective modules. In an embodiment, attended tokens 810 of a particular frame which are input to the motion clue fusion modules 800-1 and 800-2 may be tokens of the particular frame on which layer normalization is performed via the first normalization layer 730, and may be copied by L so as to be input to each of the plurality of modules of the motion clue fusion modules 800-1 and 800-2. In an embodiment, feature maps 820 of a particular frame which are input to the motion clue fusion modules 800-1 and 800-2 may correspond to the feature map <<img2>> 715 of the current frame which is one of the motion clue feature maps of the plurality of frames which include the information about the motion existing between the images of neighboring frames which is obtained from one of the plurality of third modules 460-1, 460-2, 460-3, and 460-4. In an embodiment, the motion clue feature map <<img2>> 715 of the current frame which is input to the motion clue fusion modules 800-1 and 800-2 may include L three-dimensional feature maps, and thus, each three-dimensional feature map may be given as an input of each group in the motion clue fusion modules 800-1 and 800-2. In an embodiment, the motion clue fusion modules 800-1 and 800-2 may include a tokenization module 801 and a de-tokenization module 802, and operations of the tokenization module 801 and the de-tokenization module 802 may correspond to operations of the tokenization module 431 and the de-tokenization module 432 which are described above.

Referring to FIG. 8A, when the electronic device obtains third tokens of a first frame, based on second tokens of a first frame and a first feature map of the first frame, the electronic device may obtain fourth tokens of the first frame by performing tokenization on the first feature map of the first frame. In an embodiment, the electronic device may obtain the third tokens of the first frame, based on the fourth tokens of the first frame and the second tokens of the first frame.

The motion clue fusion module 800-1 may apply, to the tokenization module 801, one feature map among input L three-dimensional feature maps 820 of a particular frame, and thus, may obtain motion clue tokens 821. The feature maps 820 of the particular frame which are input to the tokenization module 801 may pass through tokenization, and thus, may be converted into the motion clue tokens 821. Here, one feature map among the L three-dimensional feature maps 820 of the particular frame may correspond to the first feature map of the first frame, and the motion clue tokens 821 may correspond to the aforementioned fourth token of the first frame.

In an embodiment, the motion clue fusion module 800-1 may generate mixed tokens 830-1 by concatenating the motion clue tokens 821 and the attended tokens 810 of the particular frame and applying them to multi-layer perceptron (not shown). In an embodiment, the motion clue fusion module 800-1 may obtain weighted motion tokens 840-1 by performing element-wise product on the mixed tokens 830-1 and motion clue tokens 821. Here, the attended tokens 810 of the particular frame may correspond to the aforementioned second token of the first frame.

In an embodiment, the motion clue fusion module 800-1 may concatenate the weighted motion tokens 840-1 and the attended tokens 810 of the particular frame, and thus, may obtain tokens of one group among tokens 850-1 of L groups of the particular frame which include information about a motion existing between images of neighboring frames. In an embodiment, the tokens 850-1 of L groups of the particular frame which include the information about the motion existing between images of neighboring frames may not be allocated again to query tokens, key tokens, and value tokens, and may be input to each of L heads of the spatial multi-head attention module 740 included in the spatial attention module 700. Here, tokens of one group among the tokens 850-1 of L groups of the particular frame which include the information about the motion existing between images of neighboring frames may correspond to the aforementioned third token of the first frame.

Referring to FIG. 8B, when the electronic device obtains third tokens of a first frame, based on second tokens of a first frame and a first feature map of the first frame, the electronic device may obtain a second feature map of the first frame by performing de-tokenization on the second tokens of the first frame. In an embodiment, the electronic device may obtain a third feature map of the first frame, based on the feature map of the first frame and the second feature map of the first frame. In an embodiment, the electronic device may obtain the third tokens of the first frame by performing tokenization on the third feature map of the first frame.

Referring to FIG. 8B, by applying the input attended tokens 810 of the particular frame to the de-tokenization module 802, an attended feature map 811 may be obtained. The attended tokens 810 of the particular frame which are input to the de-tokenization module 802 may be converted into the attended feature map 811 via de-tokenization. Here, the attended tokens 810 of the particular frame may correspond to the aforementioned first token of the first frame, and the attended feature map 811 may correspond to the aforementioned second feature map of the first frame.

In an embodiment, the motion clue fusion module 800-2 may generate a mixed feature map 830-2 by concatenating the attended feature map 811 and one feature map among the L three-dimensional feature maps 820 of the particular frame and applying them to multi-layer perceptron (not shown). In an embodiment, the motion clue fusion module 800-2 may obtain a weighted feature map 840-2 by performing element-wise product on the mixed feature map 830-2 and the feature maps 820 of the particular frame. In an embodiment, the motion clue fusion module 800-2 may concatenate the attended feature map 811 and the weighted feature map 840-2 and may obtain a feature map 845 of the particular frame which includes the information about the motion existing between images of neighboring frames. Here, one feature map among the L three-dimensional feature maps 820 of the particular frame may correspond to the aforementioned first feature map of the first frame, and the feature map 845 of the particular frame which includes the information about the motion existing between images of neighboring frames may correspond to the aforementioned third feature map of the first frame.

In an embodiment, by applying, to the tokenization module 801, the feature map 845 of the particular frame which includes the information about the motion existing between images of neighboring frames, tokens of one group among tokens 850-2 of L groups of the particular frame which include the information about the motion existing between images of neighboring frames may be obtained. The feature map 845 of the particular frame which includes the information about the motion existing between images of neighboring frames and which is input to the tokenization module 801 may be converted, via tokenization, into the tokens of one group among the tokens 850-2 of L groups of the particular frame which include the information about the motion existing between images of neighboring frames. In an embodiment, the tokens of one group among the tokens 850-2 of L groups of the particular frame which include the information about the motion existing between images of neighboring frames may be embedded again, for each group, to query tokens, key tokens, and value tokens, and may be input to each of L heads of the spatial multi-head attention module 740 included in the spatial attention module 700. Here, the tokens of one group among the tokens 850-2 of L groups of the particular frame which include the information about the motion existing between images of neighboring frames may correspond to the aforementioned third tokens of the first frame.

FIGS. 9A, 9B, and 9C are diagrams for describing a method by which the electronic device performs training of an inpainting model, based on a first loss function, according to an embodiment of the present disclosure.

Referring to FIG. 9A, the electronic device may apply, to the inpainting model, a training video 901 in which a second reconstruction area is masked and a video 902 that displays the second reconstruction area, and thus, may generate a training video 905 including the reconstructed second reconstruction area. In an embodiment, the electronic device may calculate the first loss function, based on a training video (not shown) including the changeless original second reconstruction area without being masked and the training video 905 including the reconstructed second reconstruction area, and may perform second training 900 of the inpainting model, based on the calculated first loss function. Referring to FIG. 9A, the second training 900 of the inpainting model based on the first loss function may be included in the second training 300 that is one of factorized training of the inpainting model which is described with reference to FIG. 3.

In an embodiment, the inpainting model may include an encoder 910, a decoder 920, a tokenization module 931, a de-tokenization module 932, a plurality of first modules 940-1, 940-2, 940-3, and 940-4, a plurality of second modules 950-1, 950-2, 950-3, and 950-4, a plurality of third modules 960-1, 960-2, 960-3, and 960-4, and a plurality of fourth modules 970-1, 970-2, 970-3, and 970-4. Here, operations of the encoder 910, the decoder 920, the tokenization module 931, the de-tokenization module 932, the plurality of first modules 940-1, 940-2, 940-3, and 940-4, the plurality of second modules 950-1, 950-2, 950-3, and 950-4, and the plurality of third modules 960-1, 960-2, 960-3, and 960-4 may correspond to the operations of the encoder 410, the decoder 420, the tokenization module 431, the de-tokenization module 432, the plurality of first modules 440-1, 440-2, 440-3, and 440-4, the plurality of second modules 450-1, 450-2, 450-3, and 450-4, and the plurality of third modules 460-1, 460-2, 460-3, and 460-4 which are described with reference to FIG. 4B. Also, an inpainting algorithm to be described below may be equally applied to an inferring operation in which the inpainting model described with reference to FIGS. 4A and 4B performs inpainting on a target video including a target reconstruction area.

In an embodiment, the electronic device may obtain an optical flow between images of neighboring frames of a training video including a reconstruction area. In an embodiment, the electronic device may calculate the first loss function based on the generated optical flow, and may perform the second training 900 of the inpainting model, based on the first loss function.

In an embodiment, the optical flow may be obtained based on information about a motion existing between images of neighboring frames of the training video 901 including the second reconstruction area which is obtained from one of the plurality of third modules 960-1, 960-2, 960-3, and 960-4.

In an embodiment, the plurality of fourth modules 970-1, 970-2, 970-3, and 970-4 may generate the optical flow, based on tokens of a plurality of frames on which temporal attention is performed and which are obtained from the plurality of second modules 450-1, 450-2, 450-3, and 450-4 and a feature map obtained from the plurality of third modules 960-1, 960-2, 960-3, and 960-4. In an embodiment, the plurality of fourth modules 970-1, 970-2, 970-3, and 970-4 may be referred to as an optical flow generation module, in that they generate an optical flow between images of neighboring frames.

Referring to FIG. 9B, the electronic device may obtain a motion feature map and a context feature map of a particular frame, based on tokens of the particular frame. In an embodiment, the motion feature map may include features of pixels which are obtainable from a motion of an object or a pixel within an image, according to a change in frames. In an embodiment, the context feature map may include features of pixels which are obtainable from the image itself, regardless of the change in frames.

In an embodiment, the electronic device may obtain attended tokens 951-2b of a second frame via the second temporal attention module 950-2. The attended tokens 951-2b of the second frame may indicate a token of the second frame on which temporal attention is performed by the second temporal attention module 950-2.

In an embodiment, the electronic device may apply the attended tokens 951-2b of the second frame to a de-tokenization module 930, and thus, may obtain an attended feature map 952-2b of the second frame. An operation of the de-tokenization module 930 may correspond to operations of the de-tokenization module 432 of FIGS. 4A and 4B. The attended tokens 951-2b of the second frame which are input to the de-tokenization module 930 may be converted into the attended feature map 952-2b of the second frame via de-tokenization.

In an embodiment, the electronic device may apply the attended feature map 952-2b of the second frame to a linear transparent layer 940, and thus, may obtain a motion feature map 953-2b of the second frame and a context feature map 953-2b of the second frame. In an embodiment, the linear transparent layer 940 may be a model trained to output a motion feature map of a particular frame and a context feature map of the particular frame by receiving an input of a feature map of the particular frame. In this regard, the electronic device according to an embodiment of the present disclosure may optimize and efficiently use a hardware resource in a training and inferring process of the inpainting model, in that the electronic device may obtain the motion feature map together with the context feature map by using one linear transparent layer.

Referring to FIG. 9C, the electronic device may obtain a motion clue feature map 961-2b of a first frame by applying, to the second motion clue estimation module 960-2, a motion feature map 953-2a of the first frame and the motion feature map 953-2b of the second frame which are obtained from the second temporal attention module 950-2. In this regard, the second frame may indicate a frame immediately after the first frame, and the motion clue feature map 961-2b of the first frame may correspond to the L three-dimensional feature maps 820 of the particular frame which are described with reference to FIGS. 8A and 8B. In an embodiment, the motion clue feature map 961-2b of the first frame may be input to the second spatial attention module 940-2 and the second optical flow generation module 970-2.

In an embodiment, the second motion clue estimation module 960-2 may generate a four-dimensional (4D) cost volume 962-2, based on the motion feature map 953-2a of the first frame and the motion feature map 953-2b of the second frame. The 4D cost volume 962-2 may include a two-dimensional (2D) cost map 963-2 of a plurality of pixels which indicates a visual similarity between a plurality of pixels of the motion feature map 953-2a of the first frame and a plurality of pixels of the motion feature map 953-2b of the second frame. For example, when a size of the motion feature map 953-2a of the first frame and the motion feature map 953-2b of the second frame is H x W, the 4D cost volume 962-2 may include a 2D cost map 953-2a having a size of H x W of H x W pixels. In an embodiment, a visual similarity may be calculated based on L1 distance, L2 distance, cosine similarity, etc., between pixels of a comparison target object, but the present disclosure is not limited to the aforementioned example.

In an embodiment, the second motion clue estimation module 960-2 may perform tokenization on the 2D cost map 953-2a of a plurality of pixels, and thus, obtain a 2D cost map of each of the plurality of tokenized pixels. In an embodiment, the second motion clue estimation module 960-2 may obtain a key vector and a value vector of each of the plurality of pixels, based on the obtained 2D cost map 963-2 of the plurality of tokenized pixels. In an embodiment, the second motion clue estimation module 960-2 may generate the motion clue feature map 961-2b of the second frame by performing cross attention based on learnable code 963-2 corresponding to the obtained key vector and the obtained value vector of each of the plurality of pixels and their query vector. In an embodiment, the learnable code 963-2 may be a two-dimensional vector including L one-dimensional vectors that are randomly initialized, and may be optimized via training of various inpainting models disclosed in the present specification. In an embodiment, the second motion clue estimation module 960-2 may generate the motion clue feature map 961-2b by using Equation below.

$$[Equation\ 6]$$

$$K_x = Conv_{1\times1}\big(Concat(F_x, PE)\big),$$

$$V_x = Conv_{1\times1}\big(Concat(F_x, PE)\big),$$

$$T_x = Attention(C, K_x, V_x),$$

In this regard, $F_x$, $T_x$, and C may sequentially represent the 2D cost map 963-2 of the plurality of pixels, the motion clue feature map 961-2b of the first frame, and the learnable code 963-2, and PE may represent a vector to which positions of the plurality of pixels in the 2D cost map 963-2 are embedded.

In an embodiment, a size of the motion clue feature map 961-2b of the first frame may be determined based on a size of the 2D cost map 963-2 of each of the plurality of pixels and a size of the learnable code 964-2. For example, when the size of the 2D cost map 963-2 of each of the plurality of pixels is H x W and the size of the learnable code 964-2 is D x L, the size of the motion clue feature map 961-2b of the first frame may be H x W x D x L. In an embodiment, one of dimensions that determine the size of the learnable code 964-2 may be determined to correspond to the number of a plurality of heads of the spatial multi-head attention module 740 of FIG. 7. For example, a value of L that is one of the dimensions that determine the size of the learnable code 964-2 may be the same as L that is the number of the plurality of heads of the spatial multi-head attention module 740.

In an embodiment, the second optical flow generation module 970-2 may obtain a cost patch 965-2 of the plurality of pixels, based on the 4D cost volume 962-2 and a first optical flow 971-1b obtained from the first optical flow generation module 970-1. Here, the first optical flow 971-1b may indicate an optical flow between an image of the first frame and an image of the second frame which are generated by the first optical flow generation module 970-1.

In an embodiment, the second optical flow generation module 970-2 may calculate a reference position of each of the plurality of pixels by adding the first optical flow 971-1b to a position of each of the plurality of pixels. In an embodiment, the second optical flow generation module 970-2 may obtain the cost patch 965-2 of the plurality of pixels by cropping an area included within a preset distance with respect to the reference position of the plurality of pixels on a 2D cost map $C_p$ of the plurality of pixels included in the 4D cost volume 962-2. For example, the cost patch may be generated as a cropped area in which points of (x - 1, y - 1), (x - 1, y + 1), (x + 1, y - 1) and (x + 1, y + 1) of a 2D cost map $C_p$ of a particular pixel are vertices to have a 3x3 size around a reference position (x, y) of the particular pixel on the 2D cost map $C_p$, but the present disclosure is not limited thereto.

In an embodiment, the second optical flow generation module 970-2 may obtain a cost query vector, based on the obtained cost patch 964-2, and may obtain a cost key vector and a cost value vector, based on the motion clue feature map 961-2b of the first frame. In an embodiment, the second optical flow generation module 970-2 may generate a cost feature map by performing cross attention based on the cost query vector, the cost key vector, and cost queue vectors.

In an embodiment, the second optical flow generation module 970-2 may generate a variation flow ΔFlow by applying, to a GMA-Update module 972-2, a context feature map 954-2b of the first frame, the first optical flow 971-1b, the cost patch 964-2, and a cost feature map. In an embodiment, the second optical flow generation module 970-2 may perform update of the first optical flow 971-1b by adding the first optical flow 971-1b to the variation flow ΔFlow obtained by the GMA-Update module 972-2, and may generate a second optical flow 971-2b by applying the updated first optical flow 971-1b to an upsampling module. The second optical flow 971-2b may indicate an optical flow between an image of the first frame and an image of the second frame which are generated by the second optical flow generation module 970-2. In an embodiment, the GMA-Update module 972-2 may generate ΔFlow by using Equation below.

[Equation 7]

$$\Delta\text{Flow} = \text{GMAUpdate}(Cat(\mathbf{c_p}, \mathbf{q_p}), \text{Flow, net, inp, att})$$

$$\text{E} = \text{MotionEncoder}(Cat(\mathbf{c_p}, \mathbf{q_p}), \text{Flow})$$

$$\text{A} = \text{Aggregate}(\text{E, att})$$

$$\text{F} = \text{ConvGRU}(\text{inp}, Cat(\text{inp, E, A}))$$

$$\Delta\text{Flow} = \text{FlowHead}(\text{F})$$

In this regard, $C_p$ may represent a cost feature map, $q_p$ may represent the cost patch 964-2 of the plurality of pixels, and Flow may represent the first optical flow 971-1b. Also, net may represent a first sub-context feature map of the first frame which is generated by dividing the context feature map 954-2b of the first frame in half around a channel axis, inp may represent a second sub-context feature map of the first frame which is the other half, and att may represent a feature map obtained by performing self attention on the first sub-context feature map.

In an embodiment, the GMA-Update module 972-2 may include a motion encoder (not shown), and the motion encoder (not shown) may perform an operation corresponding to a MotionEncode function in Equation 7. In an embodiment, the motion encoder (not shown) may be a model configured to decrease a size of an input feature map and to extract important information necessary in generation of an optical flow.

In an embodiment, the GMA-Update module 972-2 may include a convolutional gated recurrent unit (not shown), and the convolutional gated recurrent unit (not shown) may perform an operation corresponding to a ConvGRU function in Equation 7. In an embodiment, the convolutional gated recurrent unit (not shown) may be a model configured to generate output data of a current frame by considering both output data of a previous frame and input data of the current frame.

In an embodiment, the GMA-Update module 972-2 may include a FlowHead module (not shown), and the FlowHead module (not shown) may perform an operation corresponding to a FlowHead function in Equation 7. In an embodiment, the FlowHead module (not shown) may be a model configured to predict an optical flow with respect to a plurality of pixels, based on data output from the convolutional gated recurrent unit by using a plurality of convolution layers.

In an embodiment, the second optical flow generation module 970-2 may repeatedly perform update of the first optical flow 971-1b. In an embodiment, whenever the update of the first optical flow 971-1b is repeatedly performed, the second optical flow generation module 970-2 may repeatedly generate the second optical flow 971-2b by applying the updated first optical flow 971-1b to the upsampling module. In an embodiment, each of the second optical flows 971-2b that are repeatedly generated may be used in calculating a first loss function to be described below.

In an embodiment, the third motion clue estimation module 960-3 and the third optical flow generation module 970-3 may equally perform the aforementioned operations of the second motion clue estimation module 960-2 and the second optical flow generation module 970-2. For example, the third motion clue estimation module 960-3 may generate a motion clue feature map 961-3b of the first frame, based on a motion feature map 953-3a of the first frame and a motion feature map 953-3b of the second frame which are obtained from the third temporal attention module 950-3, and the third optical flow generation module 970-3 may generate a third optical flow 971-3b, based on the second optical flow 971-2b, the motion clue feature map 961-3b of the second frame, and a context feature map 953-3b of the first frame which is obtained from the third temporal attention module 950-3.

In an embodiment, the electronic device may calculate the first loss function, based on an optical flow obtained from the plurality of fourth modules 970-1, 970-2, 970-3, and 970-4. In an embodiment, second training may be performed on an inpainting model, based on the calculated first loss function. In an embodiment, the first loss function $L_{Temporal-Consistency}$ $L_{Flow-Sup}$ may include at least one of , and $L_{Flow-Self}$ in which an optical flow is a parameter. In an embodiment, $L_{Temporal-Consistency}$, $L_{Flow-Sup}$ and $L_{Flow-self}$ may be calculated by using Equation below.

[Equation 8]

$$L_{Temporal-Consistency}(f, Flow) =$$

$$\frac{1}{T-1}\sum\nolimits_{t=2}^{T}\sum\nolimits_{b=1}^{B}\sum\nolimits_{r=1}^{R} w_{(b,r)} \cdot O_{t-1}^{t} \cdot \rho\left(f(I_{t-1}) - W_{t-1}^{t}\left(f(I_t), \text{Flow}_{(t-1)\to t}^{(b,r)}\right)\right)$$

$$L_{Flow-Sup}(\text{Flow})$$
$$= \frac{1}{T-1}\sum\nolimits_{t=2}^{T}\sum\nolimits_{b=1}^{B}\sum\nolimits_{r=1}^{R} w_{(b,r)} \cdot \left\|\text{Flow}_{(t-1)\to t}^{(b,r)} - \text{Flow}_{(t-1)\to t}^{GT}\right\|_1$$

$$L_{Flow-Self}(\text{Flow})$$
$$= \frac{1}{T-1}\sum\nolimits_{t=2}^{T}\sum\nolimits_{b=1}^{B}\sum\nolimits_{r=1}^{R} w_{(b,r)} \cdot O_{t-1}^{t} \cdot \rho\left(I_{t-1} - W_{t-1}^{t}\left(I_t, \text{Flow}_{(t-1)\to t}^{(b,r)}\right)\right)$$

In this regard, B represents the number of the plurality of fourth modules 970-1, 970-2, 970-3, and 970-4, and R represents the number of times an optical flow is repeatedly generated by the plurality of fourth modules 970-1, 970-2, 970-3, and 970-4. $W_s^t(x)$ represents a function of performing warping an image of a frame at a t point in time into an image of a frame at a s point in time, based on an optical flow between the image of the frame at the t point in time and the image of the frame at the s point in time. $O_s^t$ represents a binarized mask indicating an unseen area because a particular pixel of an image is occluded by another pixel due to warping, and has a value of 1 for valid pixels and has a value of 0 for invalid pixels, i.e., occluded pixels. $W(b,r)$ represents a weight applied to each of optical flows repeatedly generated by each fourth module, and in this regard, an optical flow that is further recently generated among the repeatedly-generated optical flows has a further optimized weight, and optical flows generated by a latter fourth module have a further optimized weight, compared to optical flows generated by former fourth modules. In each fourth module, an optical flow may be generated R times, and a whole inpainting model may include B fourth modules. $\rho(x)$ may represent a robust function that corresponds to Equation below.

[Equation 9]

$$\rho(x) = (|x| + \varepsilon)^{0.4}$$

In an embodiment, optical flows that are generated by a module positioned in the front in the inpainting model among the plurality of fourth modules 970-1, 970-2, 970-3, and 970-4 or for which the number of times repetitive update is performed is small may correspond to an outlier that is data far from an actual answer. Accordingly, the electronic device according to an embodiment of the present disclosure may prevent occurrence of a problem due to an optical flow corresponding to an outlier in a training procedure, in that the electronic device may perform training of an inpainting model by calculating a first loss function by using the robust function. Also, as optical flow that is being calculated is incomplete, and an occluded pixel is not completely filtered out only by $O_s^t$, an outlier due to artifact propagated to another frame may be decreased by the robust function so that calculation may be stably performed.

FIG. 10 is a flowchart for describing a method by which the electronic device performs training of an inpainting model, based on a second loss function, according to an embodiment of the present disclosure.

Referring to FIG. 10, the electronic device may perform affine transformation on a training video 901 in which a second reconstruction area is masked and a mask video 902 that displays the second reconstruction area, and thus, may obtain a first affine-transformed training video 1001 and a first affine-transformed mask video 1002. In an embodiment, the electronic device may apply the first affine-transformed training video 1001 and the first affine-transformed mask video 1002 to an inpainting model, and thus, may obtain a reconstructed first affine-transformed training video 1006-1.

In an embodiment, the electronic device may apply, to the inpainting model, a training video 901 in which a second reconstruction area is masked and a video 902 that displays the second reconstruction area, and thus, may generate a training video 905 including the reconstructed second reconstruction area. In an embodiment, the electronic device may obtain a reconstructed second affine-transformed training video 1006-2 by performing affine transformation on the training video 905 including the reconstructed second reconstruction area.

In an embodiment, the electronic device may calculate a second loss function, based on the reconstructed first affine-transformed training video 1006-1 and the reconstructed second affine-transformed training video 1006-2, and may perform second training 1000 of the inpainting model, based on the calculated second loss function. The second training 1000 of the inpainting model based on the second loss function may be included in the second training 300 that is one of factorized training of the inpainting model which is described with reference to FIG. 3. In an embodiment, the second loss function may be calculated by using Equation below.

[Equation 10]

$$L_{TC-image}(f) = s \cdot \frac{1}{T-1}\sum_{t=2}^{T} O_t \cdot \rho\left(f\left(A_{t-1}^t(I_t), A_{t-1}^t(M_t)\right) - A_{t-1}^t\left(f(I_t, M_t)\right)\right),$$

$$S = \sum_{b=1}^{B}\sum_{r=1}^{R} W_{(b,r)}$$

In this regard, $A_{t-1}^t(x)$ represents affine transformation performed on an image of a $t^{th}$ frame among a plurality of frames. s represents a scale factor for maintaining compatibility with weight $w(b,r)$ applied in Equations 6, 7, and 8 described above. $O_t$ represents a binarized mask indicating an unseen area because a particular pixel of an image is occluded by another pixel due to affine transformation, and has a value of 1 for valid pixels and has a value of 0 for invalid pixels, i.e., occluded pixels. $\rho(x)$ represents the robust function described with reference to Equation 9, and an effect that may be expected by using the robust function may be equally expected in training of the inpainting model based on the second loss function.

In an embodiment, the electronic device may perform various types of affine transformation. For example, translation transformation, rotation transformation, scale transformation, and shear transformation may be performed, and a range of performance according to each transformation may be preset. For example, the translation transformation may be performed up to 4 pixels in a particular direction, the rotation transformation may be performed up to 6 degrees, the scale transformation may be performed from 0.94 times to 1.06 times, and the shear transformation may be performed up to 1 degree, but the present disclosure is not limited thereto. In an embodiment, the electronic device may select and perform at least one affine transformation under the preset range among the aforementioned various types of affine transformation on an image of a particular frame, and may select and perform different affine transformation other than the aforementioned affine transformations.

In this regard, the electronic device according to an embodiment of the present disclosure may calculate a loss function, based on images obtainable by performing affine transformation, and may perform training of the inpainting model, based on the calculated loss function. Therefore, even when a change similar to affine transformation occurs in a target video image, the inpainting model may decrease its sensitivity to that so as to obtain a further natural inpainting result.

FIGS. 11A, 11B, and 11C are diagrams for describing training of an inpainting model by using a plurality of decoders according to an embodiment of the present disclosure. Referring to FIGS. 11A, 11B, and 11C, the inpainting model may include a tokenization module (not shown) and de-tokenization module (not shown), and operations and functions of the tokenization module (not shown) and the de-tokenization module (not shown) may correspond to the tokenization module 431 and the de-tokenization module 432 of FIGS. 4A and 4B which are described above.

Referring to FIG. 11A, first training 1100-1 may be performed on the inpainting model, based on a single training image including two or more reconstructed first reconstruction areas respectively obtained from one or more of a plurality of first modules 311-1, 311-2, 311-3, and 311-4 and one or more of a plurality of second modules 321-1, 321-2, 321-3, and 321-4 which are before the first training 1100-1. Here, the first training 1100-1 may be included in the first training 300 that is one of factorized training of the inpainting model of FIG. 3.

In an embodiment, the electronic device may apply the single training image 310 including the first reconstruction area to the inpainting model, and thus, may obtain the single training image 320 including the reconstructed first reconstruction area and first to fourth intermediate output single training images 1120-1, 1120-2, 1120-3, and 1120-4.

In an embodiment, the inpainting model may obtain an attended feature map by applying, to the de-tokenization module (not shown), attended tokens obtained from each of the temporal attention modules 321-1, 321-2, 321-3, and 321-4 that perform spatial attention on an input of the first to fourth intermediate output single training images. In an embodiment, the inpainting model may obtain the first to fourth intermediate output single training images 1120-1, 1120-2, 1120-3, and 1120-4 by applying the obtained attended feature map to an intermediate decoder 1110-1.

In an embodiment, the intermediate decoder 1110-1 may perform the same operation as the decoder 420 of FIGS. 4A and 4B, and may indicate a decoder configured to obtain an intermediate output image based on data output not from a final layer of the inpainting model but from an intermediate layer. In an embodiment, the first to fourth intermediate decoders 1110-1 may be a model trained to output the first to fourth intermediate output single training images 1120-1, 1120-2, 1120-3, and 1120-4 by receiving an input of the attended feature map, and may be optimized by performing various trainings disclosed in the present specification.

In an embodiment, neural network parameters of the intermediate decoder 1110-1 may be inter-shared with the neural network parameters of the final decoder 920, and the intermediate decoder 1110-1 may not be connected to some of the first to fourth temporal attention modules 321-1, 321-2, 321-3, and 321-4, and thus, may not generate some of the first to fourth intermediate output single training images 1120-1, 1120-2, 1120-3, and 1120-4.

In an embodiment, the intermediate decoder 1110-1 may be connected to some or all of the plurality of first modules 311-1, 311-2, 311-3, and 311-4, and may output intermediate output single training images, based on attended tokens output from some or all of the plurality of first modules 311-1, 311-2, 311-3, and 311-4.

In an embodiment, the electronic device may perform first training 1000-1 of the inpainting model, based on the single training image 320 including the reconstructed first reconstruction area and the first to fourth intermediate output single training images 1120-1, 1120-2, 1120-3, and 1120-4. In an embodiment, the electronic device may perform first training 1110-1 of the inpainting model by adding a loss function calculated based on the single training image 320 including the reconstructed first reconstruction area and a loss function calculated based on the first to fourth intermediate output single training images 1120-1, 1120-2, 1120-3, and 1120-4.

Referring to FIGS. 11B and 11C, second training 1100-2 and 1100-3 may be performed based on a training video including two or more reconstructed second reconstruction areas respectively obtained from two or more of the plurality of first modules 940-1, 940-2, 940-3, and 940-4 and the plurality of second modules 950-1, 950-2, 950-3, and 950-4. Here, the second training 1100-2 and 1100-3 may be included in the second training 350 that is one of factorized training of the inpainting model of FIG. 3.

In an embodiment, when the electronic device performs the second training 1100-2 of the inpainting model, based on a first loss function, the electronic device may apply, to the inpainting model, the training video 901 in which the second reconstruction area is masked and the mask video 902 that displays the second reconstruction area, and thus, may obtain the training video 905 including the reconstructed second reconstruction area and first to fourth intermediate output training videos 1130-1, 1130-2, 1130-3, and 1130-4.

In an embodiment, the inpainting model may obtain attended feature maps of a plurality of frames by applying, to the de-tokenization module (not shown), attended tokens of the plurality of frames obtained from each of the first to fourth temporal attention modules 950-1, 950-2, 950-3, and 950-4. In an embodiment, the inpainting model may apply the obtained attended feature maps of the plurality of frames to an intermediate decoder 1110-2, and thus, may obtain the first to fourth intermediate output training videos 1130-1, 1130-2, 1130-3, and 1130-4.

In an embodiment, the intermediate decoder 1110-2 may be a model trained to output the first to fourth intermediate output training videos 1130-1, 1130-2, 1130-3, and 1130-4 by receiving an input of an attended feature map of a plurality of frames, and may be optimized by performing various trainings disclosed in the present specification.

In an embodiment, neural network parameters of the intermediate decoder 1110-2 may be inter-shared with the neural network parameters of the final decoder 920, and some of the intermediate decoder 1110-2 may not be connected to some of the first to fourth temporal attention modules 950-1, 950-2, 950-3, and 950-4, and thus, some of the first to fourth intermediate output training videos 1130-1, 1130-2, 1130-3, and 1130-4 may not be generated.

In an embodiment, the intermediate decoder 1110-2 may be connected to some or all of the first to fourth spatial attention modules 940-1, 940-2, 940-3, and 940-4, and may output intermediate output training videos, based on attended tokens obtained from some or all of the first to fourth spatial attention modules 940-1, 940-2, 940-3, and 940-4.

In an embodiment, the electronic device may perform the second training 1100-2 of the inpainting model, based on the training video 905 including the reconstructed second reconstruction area and the first to fourth intermediate output training videos 1130-1, 1130-2, 1130-3, and 1130-4. In an embodiment, the electronic device may perform the second training 1110-2 of the inpainting model by adding a first loss function calculated based on the training video 905 including the reconstructed second reconstruction area and a first loss function calculated based on the first to fourth intermediate output training videos 1130-1, 1130-2, 1130-3, and 1130-4.

In an embodiment, when the electronic device performs the second training 1100-3 of the inpainting model based on a second loss function, the electronic device may apply, to the inpainting model, the training video 901 in which the second reconstruction area is masked and the mask video 902 that displays the second reconstruction area, and the first affine-transformed training video 1001 and the first affine-transformed mask video 1002, and thus, may obtain the reconstructed first affine-transformed training video 1006-1, the reconstructed second affine-transformed training video 1006-2, and first to fourth intermediate affine-transformed training videos 1140-1, 1140-2, 1140-3, and 1140-4. Here, each of the first to fourth intermediate affine-transformed training videos 1140-1, 1140-2, 1140-3, and 1140-4 may include videos corresponding to the reconstructed first affine-transformed training video 1006-1 and the reconstructed second affine-transformed training video 1006-2.

In an embodiment, the inpainting model may obtain attended feature maps of a plurality of frames by applying, to the de-tokenization module (not shown), attended tokens of the plurality of frames which are obtained from each of the first to fourth temporal attention modules 950-1, 950-2, 950-3, and 950-4. In an embodiment, the inpainting model may apply the obtained attended feature maps of the plurality of frames to the intermediate decoder 1110-3, and thus, may obtain the first to fourth intermediate affine-transformed training videos 1140-1, 1140-2, 1140-3, and 1140-4.

In an embodiment, the intermediate decoder 1110-3 may be a model trained to output the first to fourth intermediate affine-transformed training videos 1140-1, 1140-2, 1140-3, and 1140-4 by receiving an input of the attended feature maps of the plurality of frames, and may be optimized by performing various trainings disclosed in the present specification.

In an embodiment, neural network parameters of the intermediate decoder 1110-1 may be inter-shared with the neural network parameters of the final decoder 920, and the intermediate decoder 1110-1 may not be connected to some of the first to fourth temporal attention modules 950-1, 950-2, 950-3, and 950-4, and thus, may not generate some of the first to fourth intermediate affine-transformed training videos 1140-1, 1140-2, 1140-3, and 1140-4.

In an embodiment, the intermediate decoder 1110-1 may be connected to some or all of the first to fourth spatial attention modules 940-1, 940-2, 940-3, and 940-4, and may output intermediate affine-transformed training videos, based on attended tokens obtained from some or all of the first to fourth spatial attention modules 940-1, 940-2, 940-3, and 940-4. In an embodiment, the electronic device may perform the second training 1100-3 of the inpainting model, based on the reconstructed first affine-transformed training video 1006-1, the reconstructed second affine-transformed training video 1006-2, and the first to fourth intermediate affine-transformed training videos 1140-1, 1140-2, 1140-3, and 1140-4. In an embodiment, the electronic device may perform the second training 1100-3 of the inpainting model by adding a second loss function calculated based on the reconstructed first affine-transformed training video 1006-1 and the reconstructed second affine-transformed training video 1006-2, and a second loss function calculated based on the first to fourth intermediate affine-transformed training videos 1140-1, 1140-2, 1140-3, and 1140-4.

In an embodiment, the electronic device may not calculate a GAN loss function for an image or a video which is obtained based on intermediate decoders 1110-1, 1110-2, and 1110-3, and may calculate at least one of a reconstruction loss function, a first loss function, and a second loss function. This is because optimization is more stable when focusing on GAN loss function calculation with respect to an image or a video obtained from the final decoder 920, rather than performing generative adversarial neural network training based on an image or a video obtained from the intermediate decoders 1110-1, 1110-2, and 1110-3.

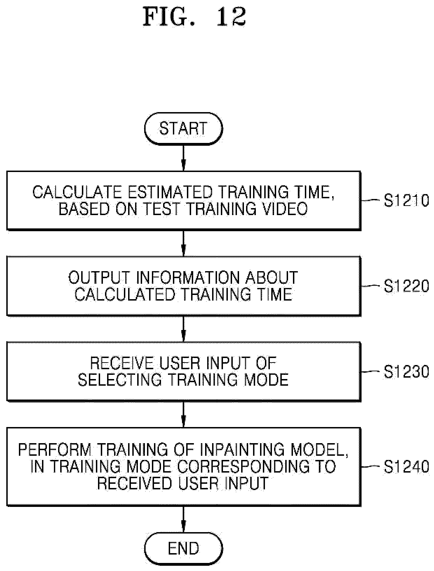

FIG. 12 is a flowchart for describing a method of training an inpainting model according to an embodiment of the present disclosure.

In S1210, the electronic device calculates an estimated training time, based on a test training video. The test training video may indicate a training video for calculating a time taken by the electronic device to perform first training and second training of the inpainting model before training of the inpainting model is performed. In an embodiment, the test training video may be a part of training video including a second reconstruction area used in actual training of the inpainting model. In an embodiment, the training video including the second reconstruction area may include a training video in which the second reconstruction area is masked and a mask video that displays the second reconstruction area.

In an embodiment, the electronic device may perform test training of the inpainting model, based on the test training video, and may calculate a time taken to complete the test training. In an embodiment, the electronic device may calculate an estimated training time requested for the inpainting model to perform the first training and the second training, based on information about a size, a time, and the number of each of training videos including the test training and the second reconstruction area, and a time taken to complete test training.

In an embodiment, the second training may include a first training mode and a second training mode. The first training mode is a mode in which the second training is performed based on a first loss function, and the second training mode is a mode in which training based on the first loss function and training based on the second loss function are repeatedly performed in an alternate manner. In an embodiment, when the electronic device calculates the estimated training time, the electronic device may calculate each of an estimated training time to be taken to perform training of the inpainting model according to the first training mode and an estimated training time to be taken to perform training of the inpainting model according to the second training mode.

In operation S1220, the electronic device may output information about the calculated training time. In an embodiment, when information about the training time calculated for each of the first training mode and the second training mode is output, information about estimated inpainting performance according to each of the first training mode and the second training mode may also be output. In an embodiment, the electronic device may perform test training in each of the first training mode and the second training mode, and thus, may calculate the estimated inpainting performance according to each of the first training mode and the second training mode.

In operation S1230, the electronic device may receive a user input of selecting a training mode. In an embodiment, the user input may be a user input of selecting one of the first training mode and the second training mode. In an embodiment, the user input may be an input of setting at least one of a training time and inpainting performance. In this regard, the electronic device may identify a training mode that satisfies at least one of a user-input training time and the inpainting model performance among the first training mode and the second training mode, based on the estimated training time and the estimated inpainting performance

In S1240, the electronic device performs training of the inpainting model, in a training mode corresponding to the user input. In an embodiment, the training mode corresponding to the user input may be one of the first training mode and the second training mode.

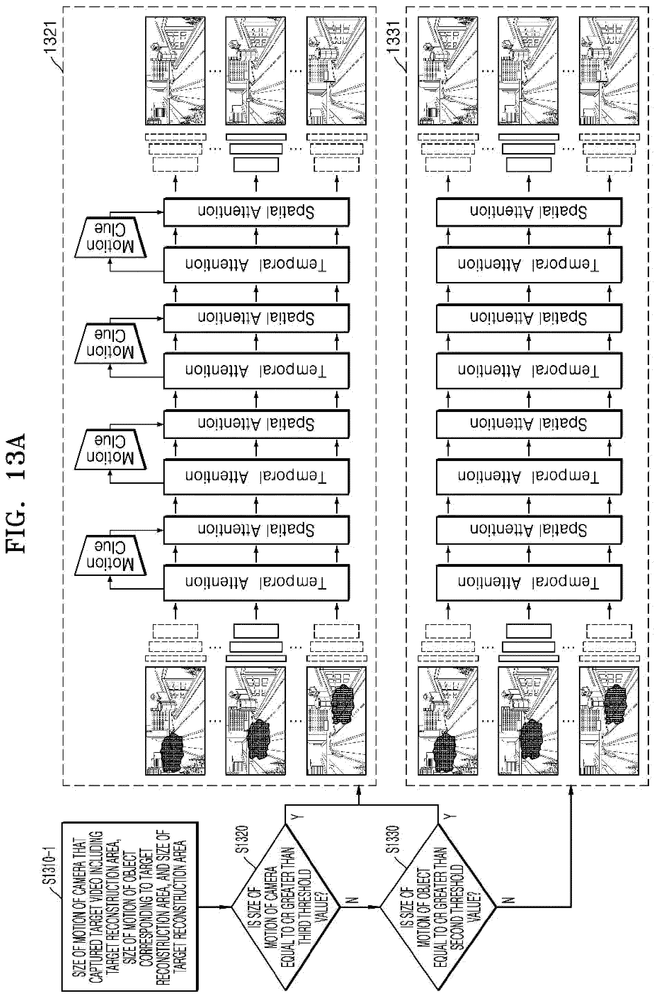

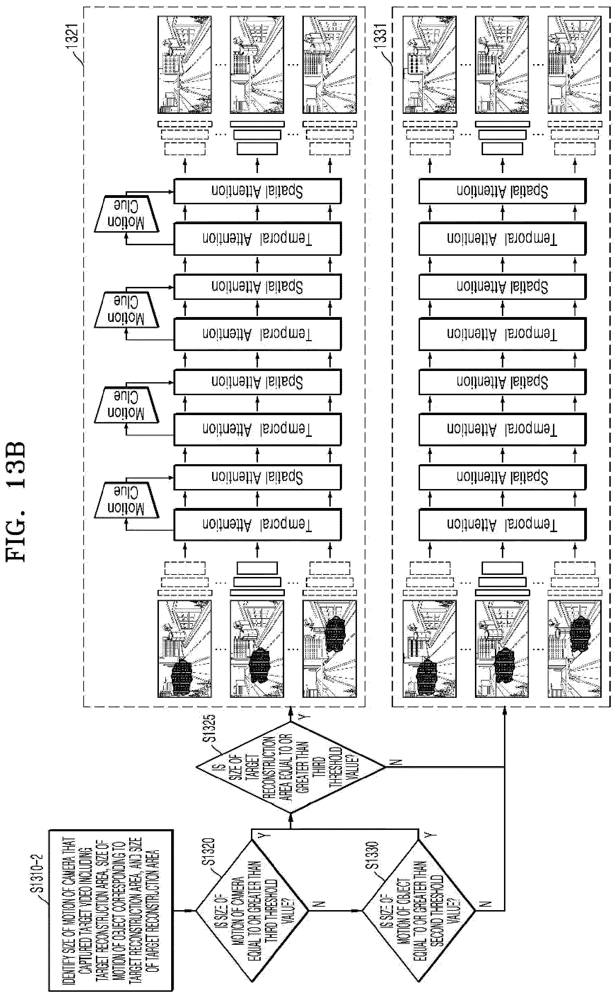

FIGS. 13A and 13B are flowcharts for describing an inferring procedure using an inpainting model according to an embodiment of the present disclosure.

In an embodiment, the electronic device may identify at least one of a size of a motion of a camera that captured a target video including a target reconstruction area, a size of a motion of an object corresponding to the target reconstruction area, and a size of the target reconstruction area. Here, even when the target reconstruction area is not included when the target video is captured but the target reconstruction area is set in a target video captured after the target video is captured, a camera that captures the target video may also be included in the camera that captured the target video including the target reconstruction area.

In an embodiment, the electronic device may identify the size of the motion of the camera, based on camera motion information obtained from a sensor for detecting motion of the camera included in the camera that captured the target video including the target reconstruction area or the electronic device including the camera. In an embodiment, when image inpainting is performed on the target video in real time, the camera motion information may be obtained from a sensor for detecting the motion of the camera that captures the target video. In an embodiment, the sensor for detecting the motion of the camera may include an inertial measurement unit (IMU), but the present disclosure is not limited to the aforementioned example. In an embodiment, a camera motion matrix may be generated at a preset time or preset frame intervals. In an embodiment, the electronic device may calculate a matrix norm of the generated camera motion matrix, and may identify the size of the motion of the camera, based on the calculated matrix norm.

In an embodiment, the electronic device may identify the size of motion of the camera that captured the target video, based on an image of the target video. In an embodiment, the electronic device may generate a motion matrix of the camera that captured the target video, based on the image of the target video by using a structure from motion (SFM) algorithm. The SFM algorithm may indicate an algorithm of detecting corresponding feature point pairs in the image, estimating a posture of the camera, based on the detected feature point pair, and thus, estimating a motion of the camera that captures a video. In an embodiment, the electronic device may calculate the matrix norm of the generated camera motion matrix, and may identify the size of the motion of the camera, based on the calculated matrix norm.

In an embodiment, the electronic device may identify the size of the motion, based on an optical flow of the object corresponding to the target reconstruction area included in the target video. In an embodiment, the electronic device may use various optical flow prediction algorithms including the Lucas-Kanade algorithm so as to predict an optical flow of the object corresponding to the target reconstruction area. In an embodiment, the electronic device may identify the size of the object corresponding to the target reconstruction area, based on an average or an intermediate value of sizes of predicted optical flows.

In an embodiment, the electronic device may identify the size of the target reconstruction area, based on the number of pixels included in the target reconstruction area. In an embodiment, the electronic device may calculate a ratio of the number of pixels included in the target reconstruction area to the number of all pixels in the image, and may identify the size of the target reconstruction area, based on the calculated ratio.

In an embodiment, the electronic device may select one of a first inferring mode 1321 and a second inferring mode 1331, based on at least one of the size of the motion of the camera, the size of the motion of the object, and the size of the target reconstruction area, and may obtain third tokens of each of a plurality of frames.

In an embodiment, the first inferring mode 1321 may be a mode in which the third tokens of each of the plurality of frames are obtained based on second tokens of each of the plurality of frames and a first feature map of each of the plurality of frames. That is, the first inferring mode 1321 may correspond to obtainment of the third tokens of each of the plurality of frames according to an operation of the attention block 400-2 in the inpainting model of FIG. 4B, and may have high inpainting performance in that inpainting is performed by using information about a motion existing between images of neighboring frames obtained from a plurality of third modules, although a large hardware resource and a large computing time are requested for an interfering procedure, compared to the second inferring mode 1331 to be described below.

In an embodiment, the second inferring mode 1331 may be a mode in which the third tokens of each of the plurality of frames are obtained based on the third tokens of each of the plurality of frames. That is, the second inferring mode may correspond to obtainment of the third tokens of each of the plurality of frames according to an operation of the attention block 400-1 in the inpainting model of FIG. 4A, and may have low inpainting performance in that inpainting is performed without using information about a motion existing between images of neighboring frames obtained from a plurality of third modules, although a small hardware resource and a small computing time are requested for an interfering procedure, compared to the first inferring mode 1321 described above.

Referring to FIG. 13A, in operation S1310-1, the electronic device may identify a size of a motion of a camera that captured a target video including a target reconstruction area, and a size of a motion of an object corresponding to the target reconstruction area.

In operation S1320, the electronic device identifies whether the identified size of the motion of the camera is equal to or greater than a third threshold value. In an embodiment, when the identified size of the motion of the camera is equal to or greater than the third threshold value (S1320-Y), the electronic device may select the first inferring mode 1321 and may perform image inpainting.

In operation S1330, when the identified size of the motion of the camera is less than the third threshold value (S1320-N), the electronic device may identify whether the identified size of the motion of the object is equal to or greater than a second threshold value. In an embodiment, when the size of the motion of the camera is equal to or greater than the second threshold value (S1330-Y), the electronic device may select the first inferring mode 1321 and may perform image inpainting. When the size of the motion of the camera is less than the second threshold value (S1330-N), the electronic device may select the second inferring mode 1331 and may perform image inpainting.

Referring to FIG. 13B, in operation S1310-2, the electronic device may identify a size of a motion of a camera that captured a target video including a target reconstruction area, a size of a motion of an object corresponding to the target reconstruction area, and a size of the target reconstruction area.

In an embodiment, when the size of the motion of the camera is identified to be equal to or greater than a first threshold value (S1320-Y), or the size of the motion of the object is identified to be equal to or greater than a second threshold value (S1330-Y), the electronic device may identify whether the size of the target reconstruction area is equal to or greater than a third threshold value (S1325).

In an embodiment, when the size of the target reconstruction area is identified to be equal to or greater than the third threshold value (S1325-Y), the electronic device may select the first inferring mode 1321 and may perform image inpainting. On the other hand, when the size of the target reconstruction area is identified to be less than the third threshold value (S1325-N), the electronic device may select the second inferring mode 1331 and may perform image inpainting.

In this manner, the electronic device according to an embodiment of the present disclosure may perform inpainting by selecting an appropriate inferring mode, in consideration of various factors for a target reconstruction area and a target video including the target reconstruction area, and thus, may efficiently use a limited hardware resource and computing time.

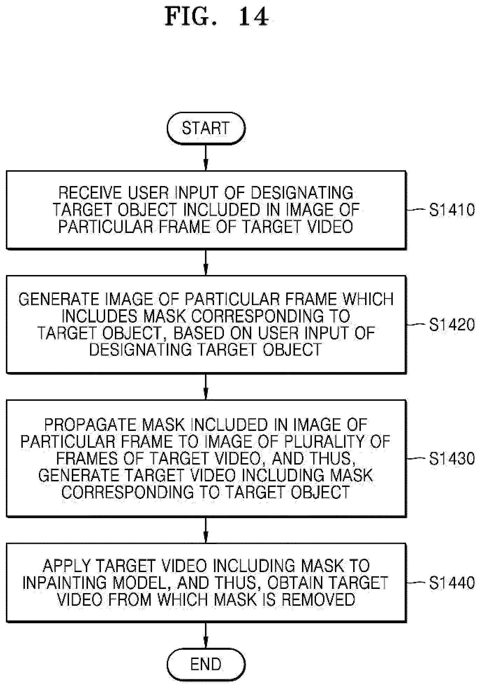

FIG. 14 is a flowchart for describing a method by which an electronic device performs video inpainting according to an embodiment of the present disclosure.

In operation S1410, the electronic device may receive a user input of designating a target object included in an image of a particular frame of a target video. In an embodiment, an object included in the image of the particular frame may include an object (e.g.: a pedestrian, a vehicle, a pet, etc.) which moves in the target video. In an embodiment, a user input of designating the object may be input by an input interface device (e.g.: a pointing device, a touch screen, etc.) for designating a particular pixel or a particular area and may be received by the electronic device, or may be input by receiving user's utterance for designating particular coordinates.

In operation S1420, the electronic device may generate an image of the particular frame which includes a mask corresponding to the target object, based on the user input of designating the target object. In an embodiment, the image of the particular frame which includes the mask corresponding to the target object may include an image in which the target object is masked and a mask image or a mask map which displays the target object. In an embodiment, the electronic device may identify the user-designated target object in the image of the particular frame of the target video, based on the user input of designating the target object. In an embodiment, the electronic device may identify the user-designated target object by using a segmentation algorithm, an instance segmentation algorithm, and an object detection algorithm, or a model based on the algorithms. In an embodiment, the electronic device may change pixel values of an area included in the target object to pixel values corresponding to the mask, and may obtain the image of the particular frame including the mask corresponding to the target object by maintaining pixel values of an area not included in the target object as pixel values included in an existing image or by changing the pixel values of the area to pixel values corresponding to other area excluding the target reconstruction area in the mask map.

In an embodiment, the electronic device may output the generated image of the particular frame including the mask corresponding to the target object. In an embodiment, the electronic device may receive a user input of re-designating a target object. For example, in operation S1420, the mask included in the generated image of the particular frame may be generated only for a portion of the actually-designated target object or may be generated for a target object that is not designated. In this case, based on the user input of re-designating the target object, the electronic device may obtain an image of the particular frame including a mask corresponding to the target object and including the portion for which the mask was not generated or a mask corresponding to the target object actually designated by a user.

In operation S1430, the electronic device may propagate the mask included in the image of the particular frame to an image of a plurality of frames of the target video, and thus, may obtain the target video including a mask corresponding to the target object. In an embodiment, the electronic device may propagate a mask included in an image of a particular frame to an image of another frame by using a mask propagation algorithm, and thus, may obtain an image of a plurality of frames corresponding to a target object. In an embodiment, the mask propagation algorithm may include a method of simultaneously performing object detection, mask estimation, and mask propagation by using a model in which an object-based algorithm and the instance segmentation algorithm are combined, or a method of predicting an optical flow for a mask and moving the mask based on the predicted optical flow, but the present disclosure is not limited to the aforementioned examples.

In operation S1440, the electronic device may apply the target video including the mask to the inpainting model, and thus, may obtain the target video from which the mask is removed. The inpainting model may perform inpainting, based on various inpainting algorithms disclosed in the present specification, and redundant descriptions are not provided here.

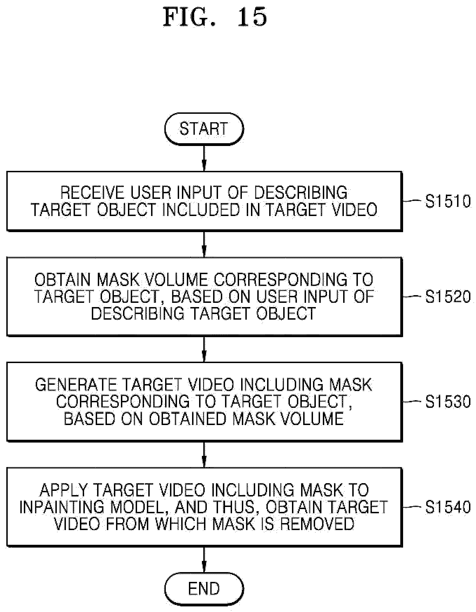

FIG. 15 is a flowchart for describing a method by which an electronic device performs video inpainting according to an embodiment of the present disclosure.

In S1510, the electronic device may receive a user input of describing a target object included in a target video. For example, a user may input, to the electronic device, a voice command indicating "Please remove a red bicycle from this video" or "Please remove a person who is sitting on a sofa from this video", or may input, to the electronic device, a text corresponding to the voice command.

In operation S1520, the electronic device may obtain a mask volume corresponding to the target object, based on the user input of describing the target object. In an embodiment, the electronic device may identify the target object, based on the user input of describing the target object. For example, the electronic device may identify the target object, based on the user input, by using various natural language processing models including Bidirectional Encoder Representations from Transformers (BERT), GPT-3, Transformer, etc. In an embodiment, the electronic device may generate the mask volume corresponding to the target object, based on information about the identified target object and the target video. For example, the electronic device may generate the mask volume corresponding to the identified target object, by using various vision-based object detection models including You Only Look Once (YOLO), Single Shot Detector (SSD), Faster R-CNN, RetinaNet, etc., and various segmentation models including Mask R-CNN, DeepLab, U-Net, etc.

In operation S1530, the electronic device may generate the target video including a mask corresponding to the target object, based on the obtained mask volume. In an embodiment, the electronic device may synthesize the generated mask volume with the target video, and thus, may generate the target video in which pixels of an area corresponding to the target object are converted into pixels corresponding to the mask.

In operation S1540, the electronic device may apply the target video including the mask to the inpainting model, and thus, may obtain the target video from which the mask is removed. The inpainting model may perform inpainting based on various inpainting algorithms disclosed in the present specification, and redundant descriptions are not provided here.

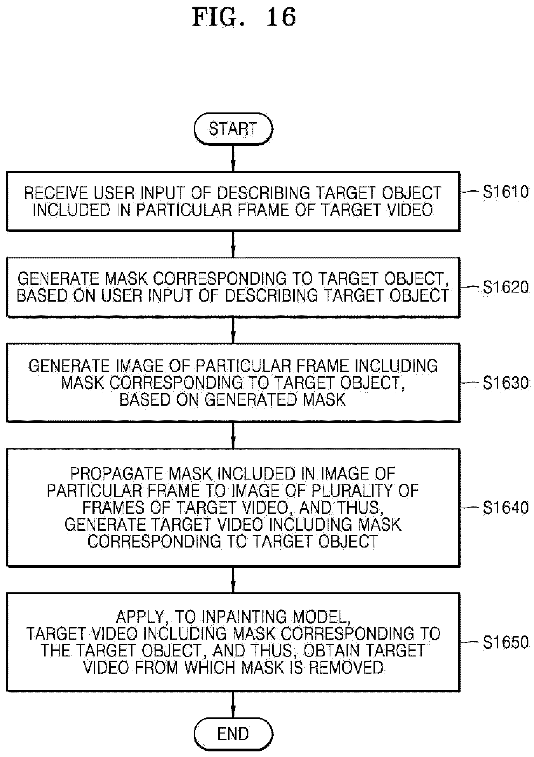

FIG. 16 is a flowchart for describing a method by which an electronic device performs video inpainting according to an embodiment of the present disclosure.

In operation S1610, the electronic device may receive a user input of describing a target object included in a particular frame of a target video. For example, a user may input, to the electronic device, a voice command indicating "Please remove a red bicycle from this video" or "Please remove a person who is riding a bicycle from this video", or may input, to the electronic device, a text corresponding to the voice command.

In operation S1620, the electronic device may generate a mask corresponding to the target object, based on the user input of describing the target object. An operation of the electronic device in operation S1620 may correspond to an operation of the electronic device in operation S1520, and thus, redundant descriptions are not provided here.

In operation S1630, the electronic device may generate an image of a particular frame including the mask corresponding to the target object, based on the generated mask. An operation of the electronic device in operation S1630 may correspond to an operation of the electronic device in operation S1530, and thus, redundant descriptions are not provided here.

In operation S1640, the electronic device may propagate the mask included in the image of the particular frame to an image of a plurality of frames of the target video, and thus, may generate the target video including the mask corresponding to the target object. An operation of the electronic device in operation S1640 may correspond to an operation of the electronic device in operation S1430, and thus, redundant descriptions are not provided here.

In operation S1650, the electronic device may apply, to the inpainting model, the target video including the mask corresponding to the target object, and thus, may obtain the target video from which the mask is removed. The inpainting model may perform inpainting based on various inpainting algorithms disclosed in the present specification, and redundant descriptions are not provided here.

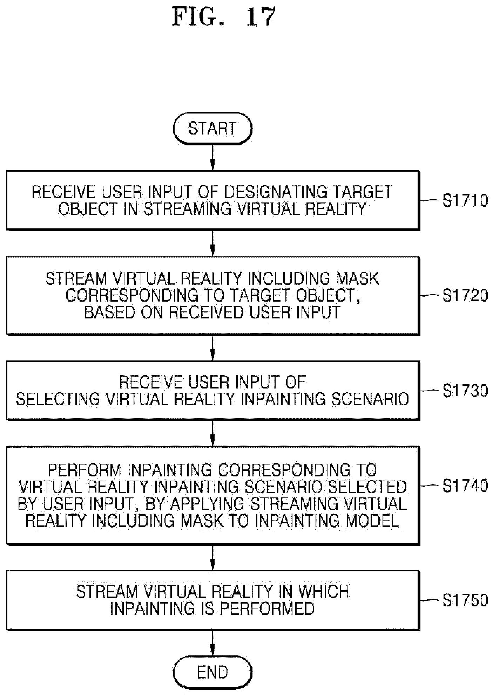

FIG. 17 is a flowchart for describing a method by which an electronic device performs video inpainting on a metaverse, according to an embodiment of the present disclosure.

In operation S1710, the electronic device may receive a user input of designating a target object in a streaming virtual reality. The streaming virtual reality may indicate a virtual reality that is implemented and displayed in the electronic device in real time, based on data for implementing the virtual reality, the data being received from a server providing a metaverse platform service. In the virtual reality, characters of other users who access the metaverse platform service are displayed together. In an embodiment, a character of a user of the electronic device may perform interaction such as communicating with a character with another user in the virtual reality, manipulating or using various objects in the virtual reality, etc. In an embodiment, the user input of designating the target object in the streaming virtual reality may be input to the electronic device via various schemes including the methods described with reference to FIGS. 14 to 16.

In operation S1720, the electronic device may stream the virtual reality including a mask corresponding to the target object, based on the received user input. In an embodiment, the electronic device may store an image of a plurality of frames indicating the streaming virtual reality. The stored image of the plurality of frames may include an image of a plurality of frames indicating a pre-displayed virtual reality or an image of a plurality of frames indicating a virtual reality not displayed yet but to be displayed. In an embodiment, the electronic device may generate the mask corresponding to the target object, based on information about the user-designated target object and the stored image of the plurality of frames, may synthesize the generated mask with the image of the plurality of frames indicating the virtual reality to be displayed, and thus, may stream the virtual reality including the mask corresponding to the target object. In an embodiment, the electronic device may use the aforementioned various vision-based object detection models and various segmentation models so as to stream the virtual reality including the mask corresponding to the target object, but the present disclosure is not limited to the aforementioned example.

In operation S1730, the electronic device may receive a user input of selecting a virtual reality inpainting scenario.

In an embodiment, the virtual reality inpainting scenario may include removal of the target object in the virtual reality. In this case, the electronic device may perform inpainting on the target object, and may display the virtual reality from which the target object is removed. In an embodiment, the virtual reality inpainting scenario may include removing the target object in the virtual reality, and displaying a character of the user (or, an actual appearance of the user) or an object in the virtual reality in an area in which the removed target object is present. In this case, the electronic device may perform inpainting on the target object, and may synthesize and display a pre-stored image of the character of the user or an image of a virtual object in the area in which the target object is present. In an embodiment, the virtual reality inpainting scenario may include scale modification in the target object. In this case, the electronic device may synthesize and display an image of a scale-modified target object in the area in which the target object is present, in the virtual reality from which the target object is removed by performing inpainting on the target object.

In operation S1740, the electronic device may perform inpainting corresponding to the selected virtual reality inpainting scenario, based on the received user input. In an embodiment, the electronic device may propagate a mask corresponding to a virtual object generated in operation S1720 to an image of a plurality of frames indicating a virtual reality to be displayed and stored in the electronic device, and thus, may generate the image of the plurality of frames including the mask and indicating the virtual reality to be displayed. In an embodiment, the electronic device may apply, to the inpainting model, the generated image of the plurality of frames including the mask and indicating the virtual reality to be displayed, and thus, may obtain the image of the plurality of frames from which the mask is removed and indicating the virtual reality to be displayed and may perform an operation corresponding to a virtual reality inpainting scenario selected based on a user input.

In an embodiment, regarding the image of the plurality of frames which is applied to the inpainting model so as to undergo inpainting, a preset number of images may be grouped to a plurality of groups and may be applied to the inpainting model, and neighboring groups among the plurality of groups may share an image of two or more particular frames. For example, when a first group includes an image of first to tenth frames, and a second group includes an image of sixth to fifteenth frames, the first group and the second group may share an image of the fifth to tenth frames. Accordingly, the electronic device may implement and display a virtual reality to be looked further naturally, wherein inpainting is performed on a target object in the virtual reality.

In operation S1750, the electronic device may stream the virtual reality in which inpainting is performed. In an embodiment, the electronic device may pre-store images of a plurality of frames which are obtained from the inpainting model and which indicate the virtual reality in which inpainting is performed, may display an image of a frame corresponding to a current streaming point in time from among the stored images of the plurality of frames, and thus, may stream the virtual reality in which inpainting is performed.

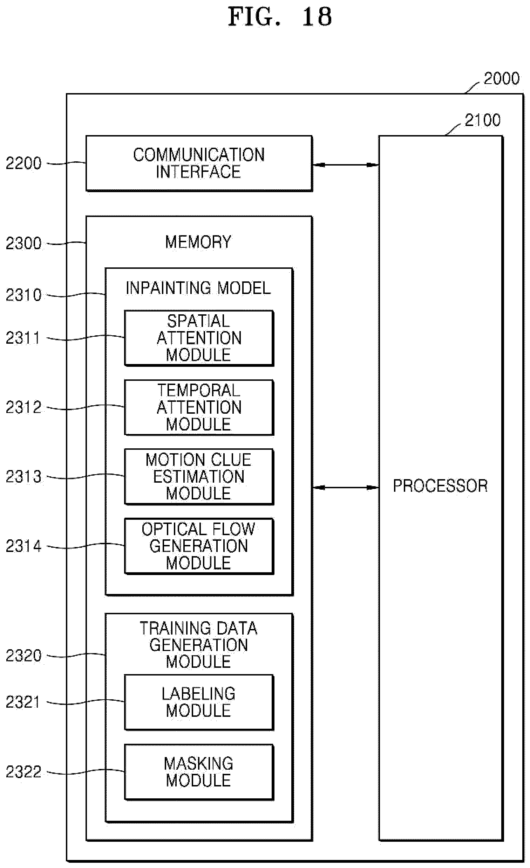

FIG. 18 is a flowchart for describing a configuration of an electronic device according to an embodiment of the present disclosure.

Referring to FIG. 18, an electronic device 2000 may include a communication interface 2100, a memory 2200, and at least one processor 2300. However, the electronic device 2000 may further include other elements including a display (not shown), an input interface (not shown), etc., in addition to the aforementioned elements.

The communication interface 2100 may perform data communication with other electronic devices, under control of the at least one processor 2300.

The communication interface 2100 may include a communication circuit. The communication interface 2100 may include the communication circuit configured to perform data communication between the electronic device 2000 and other electronic devices by using at least one of data communication schemes including wired local area network (LAN), wireless LAN, Wi-Fi, Bluetooth, ZigBee, Wi-Fi direct (WFD), infrared data association (IrDA), Bluetooth low energy (BLE), Near Field Communication (NFC), wireless broadband Internet (WiBro), World interoperability for microwave access (WiMAX), shared wireless access protocol (SWAP), wireless gigabit alliance (WiGig), and radio frequency (RF) communication.

In an embodiment, the communication interface 2100 may transmit and receive, to and from an external electronic device, data for performing various inpainting algorithms of the present disclosure. For example, the electronic device 2000 may receive a target video including a target reconstruction area from the external electronic device via the communication interface 2100, and may transmit the target video including the reconstructed target reconstruction area to the external electronic device. As another example, the electronic device 2000 may receive data for implementing and displaying a virtual reality from a server providing a metaverse platform service, via the communication interface 2100.

The memory 2200 may store instructions, a data structure, and program code which are readable by the at least one processor 2300. In disclosed embodiments, the at least one processor 2300 may perform operations by executing instructions or codes of a program stored in the memory 2200.

The memory 2200 may include a non-volatile memory including at least one of a flash memory type, a hard disk type, a multimedia card micro type, a card type memory (for example, a secure digital (SD) or an extreme digital (XD) memory), a random access memory (RAM), a static RAM (SRAM), a read-only memory (ROM), an electrically erasable programmable ROM (EEPROM), a programmable ROM (PROM), a magnetic memory, a magnetic disk, and an optical disk, and a volatile memory including a RAM, an SRAM, and the like.

In an embodiment, the memory 2200 may store data used or required in performing various inpainting algorithms of the present disclosure. For example, the memory 2200 may store an inpainting model 2210 and a training data generation module 2220 configured to train the inpainting model 2210.

In an embodiment, the inpainting model 2210 may include a spatial attention module 2211, a temporal attention module 2212, a motion clue estimation module 2213, and an optical flow generation module 2214. In this regard, the spatial attention module 2211 may correspond to a plurality of first modules of the present disclosure, the temporal attention module 2212 may correspond to a plurality of second modules of the present disclosure, the motion clue estimation module 2213 may correspond to a plurality of third modules of the present disclosure, and the optical flow generation module 2214 may correspond to a plurality of fourth modules of the present disclosure.

In an embodiment, the training data generation module 2220 may include a labeling module 2221 and a masking module 2222. In an embodiment, the labeling module 2221 may designate a reconstruction area on which image inpainting is performed, in an image including a reconstruction area or an image of a particular frame in a training video. In an embodiment, the masking module 2222 may generate a mask in a particular area of the image, and thus, may generate the image including the reconstruction area or an image of the training video. In an embodiment, training of the inpainting model 2210 may be performed based on a plurality of pieces of data generated from the training data generation module 2220.

The at least one processor 2300 may control all operations of the electronic device 2000. For example, the at least one processor 2300 may execute one or more instructions of a program stored in the memory 2200 to control all operations for the electronic device 2000 to perform image inpainting of reconstructing an image.

The at least one processor 2300 may be configured as at least one of a central processing unit, a microprocessor, a graphics processing unit, application specific integrated circuits (ASICs), digital signal processors (DSPs), digital signal processing devices (DSPDs), programmable logic devices (PLDs), field programmable gate arrays (FPGAs), an application processor (AP), a neural processing unit, or an artificial intelligence (AI)-dedicated processor having a hardware structure specialized for training and processing of an AI model.

In an embodiment, the at least one processor 2300 may be configured to apply a target video including a target reconstruction area to the inpainting model 2210 including a plurality of first modules configured to perform spatial attention based on a feature obtained from each image of a single frame of the target video and a plurality of second modules configured to perform spatio-temporal attention based on a feature obtained between images of a plurality of frames of the target video, and obtain a target video including the reconstructed target reconstruction area.

In an embodiment, the inpainting model 2210 may be an artificial intelligence model that has completed first training with respect to the plurality of first modules before the first training and the plurality of second modules configured to perform spatial attention on a single training image, and second training on the plurality of first modules on which the first training is performed and the plurality of second modules on which the first training is performed, the first training may be training to obtain a single training image including a first reconstruction area reconstructed based on a single training image including the first reconstruction area, and the second training may be training to obtain a training video in which a second reconstruction area is reconstructed based on a training video including the second reconstruction area.

In an embodiment, the at least one processor 2300 may be configured to obtain first tokens of a plurality of frames, based on the target video in which the target reconstruction area is masked and the mask video that displays the target reconstruction area. In an embodiment, the at least one processor 2300 may be configured to apply the first tokens of the plurality of frames to at least one of the plurality of second modules, and obtain second tokens of the plurality of frames on which the spatio-temporal attention is performed. In an embodiment, the at least one processor 2300 may be configured to apply the second tokens of each of the plurality of frames to at least one of the plurality of first modules, and obtain third tokens of each of the plurality of frames. In an embodiment, the at least one processor 2300 may be configured to obtain the target video including the reconstructed target reconstruction area, based on the third tokens of the plurality of frames.

In an embodiment, the inpainting model 2210 may further include a plurality of third modules configured to extract a feature obtained between images of neighboring frames among the plurality of frames.

In an embodiment, the at least one processor 2300 may be configured to apply the second tokens of the plurality of frames to at least one of the plurality of third modules, and obtain first feature maps of the plurality of frames including information about a motion existing between the images of the neighboring frames. In an embodiment, the at least one processor 2300 may be configured to obtain the third tokens of each of the plurality of frames by applying the second tokens of each of the plurality of frames and the feature map of each of the plurality of frames to at least one of the plurality of first modules.

In an embodiment, the at least one processor 2300 may be configured to obtain a first feature map of a first frame among the first feature maps of the plurality of frames, based on second tokens of the first frame among the second tokens of the plurality of frames and second tokens of a second frame that is a frame next to the first frame. In an embodiment, the at least one processor 2300 may be configured to obtain third tokens of the first frame among the third tokens of the plurality of frames, based on at least one of the second tokens of the first frame and the first feature map of the first frame.

In an embodiment, the at least one processor 2300 may be configured to obtain fourth tokens of the first frame by performing tokenization on the first feature map of the first frame. In an embodiment, the at least one processor 2300 may be configured to obtain the third tokens of the first frame, based on the fourth tokens of the first frame and the second tokens of the first frame.

In an embodiment, the at least one processor 2300 may be configured to obtain a second feature map of the first frame by performing de-tokenization on the second tokens of the first frame. In an embodiment, the at least one processor 2300 may be configured to obtain a third feature map of the first frame, based on the first feature map of the first frame and the second feature map of the first frame. In an embodiment, the at least one processor 2300 may be configured to obtain the third tokens of the first frame by performing tokenization on the third feature map of the first frame.

In an embodiment, the inpainting model 2210 may be an artificial intelligence model that has completed the first training, based on a single training image including two or more reconstructed first reconstruction areas respectively obtained from one or more of the plurality of first modules before the first training and one or more of the plurality of second modules configured to perform spatial attention on the single training image before the first training. In an embodiment, the inpainting model 2210 may be an artificial intelligence model that has completed the second training, based on a training video including two or more reconstructed second reconstruction areas respectively obtained from one or more of the plurality of first modules on which the first training is performed and one or more of the plurality of second modules on which the first training is performed.

In an embodiment, the inpainting model 2210 may be an artificial intelligence model that has completed the second training based on at least one of a first loss function and a second loss function.

In an embodiment, the first loss function may be calculated based on an optical flow between images of neighboring frames of the training video including the second reconstruction area.

In an embodiment, the second loss function may be calculated based on affine transformation being performed on the training video including the second reconstruction area and the training video including the reconstructed second reconstruction area.

In an embodiment, the optical flow may be obtained based on information about a motion existing between images of neighboring frames of the training video including the second reconstruction area which is obtained from the third module before the second training.

In an embodiment, the at least one processor 2300 may be configured to identify at least one of a size of a motion of a camera that captured the target video including the target reconstruction area, a size of a motion of an object corresponding to the target reconstruction area, and a size of the target reconstruction area. In an embodiment, the at least one processor 2300 may be configured to select one of a first inferring mode and a second inferring mode, based on at least one of the size of the motion of the camera, the size of the motion of the object, and the size of the target reconstruction area, and obtain the third tokens of each of the plurality of frames.

In an embodiment, the first inferring mode may be a mode in which the third tokens of each of the plurality of frames are obtained based on the second tokens of each of the plurality of frames and the first feature map of each of the plurality of frames

In an embodiment, the second inferring mode may be a mode in which the third tokens of each of the plurality of frames are obtained based on the second tokens of each of the plurality of frames.

Embodiments of the present disclosure may be embodied as a computer-readable recording medium, e.g., a program module to be executed in computers, which includes computer-readable instructions. The computer-readable recording medium may include any usable medium that may be accessed by computers, volatile and non-volatile medium, and detachable and non-detachable medium. Also, the computer-readable recording medium may include a computer storage medium and a communication medium. The computer storage medium includes all volatile and non-volatile media, and detachable and non-detachable media which are technically implemented to store information including computer-readable instructions, data structures, program modules or other data. The communication medium includes computer-readable instructions, a data structure, a program module, or other data such as modulation-type data signals.

Also, the computer-readable recording medium may be provided in the form of a non-transitory recording medium. Here, the term "non-transitory storage medium" may mean that the storage medium is a tangible device and does not include signals (e.g., electromagnetic waves), and may mean that data may be permanently or temporarily stored in the storage medium. For example, the "non-transitory storage medium" may include a buffer in which data is temporarily stored.

According to an embodiment, a method according to various embodiments disclosed in the present specification may be provided in a computer program product. The computer program product may be traded as commodities between sellers and buyers. The computer program product may be distributed in the form of a machine-readable storage medium (e.g., a compact disc read only memory (CD-ROM)) or may be distributed (e.g., downloaded or uploaded) online via an application store or directly between two user devices. In the case of online distribution, at least a portion of the computer program product (e.g., a downloadable app) may be at least temporarily stored or temporarily generated in a machine-readable storage medium such as a manufacturer's server, a server of an application store, or memory of a relay server.

The aforementioned descriptions of the present disclosure are merely examples, and one of ordinary skill in the art may easily understand that various modifications may be made therein without departing from the spirit or features of the present disclosure. Therefore, it is to be understood that the embodiments described above should be considered in a descriptive sense only and not for purposes of limitation. For example, configuring elements that are singular forms may be executed in a distributed fashion, and also, configuring elements that are distributed may be combined and then executed.

The scope of the present disclosure is defined not by the above detailed description but by the following claims, and all modifications derived from the meaning and scope of the claims and equivalent concepts thereof should be construed as being included in the scope of the present disclosure.

**Claims**

1. A method, performed by an electronic device, of performing video inpainting, the method comprising:

   applying a target video in which a target reconstruction area is masked and a mask video that displays the target reconstruction area to an inpainting model comprising a plurality of first modules configured to perform spatial attention based on a feature obtained from each image of a single frame of the target video and a plurality of second modules configured to perform spatio-temporal attention based on a feature obtained between images of a plurality of frames of the target video, and obtaining a target video comprising the reconstructed target reconstruction area,
   wherein the inpainting model is an artificial intelligence model that has completed
   first training 300 with respect to the plurality of first modules 311-1, 311-2, 311-3, and 311-4 before the first training 300 and the plurality of second modules 321-1, 321-2, 321-3, and 321-4 configured to perform spatial attention on a single training image before the first training 300, and
   second training 350 on the plurality of first modules 351-1, 351-2, 351-3, and 351-4 on which the first training 300 is performed and the plurality of second modules 361-1, 361-2, 361-3, and 361-4 on which the first training 300 is performed,
   wherein the first training 300 comprises training to obtain a single training image comprising a reconstructed first reconstruction area based on a single training image comprising the first reconstruction area, and
   the second training 350 comprises training to obtain a training video in which a second reconstruction area is reconstructed based on a training video comprising the second reconstruction area.

2. The method of claim 1, wherein the obtaining of the target video comprises:

   obtaining first tokens of the plurality of frames, based on the target video in which the target reconstruction area is masked and the mask video that displays the target reconstruction area;
   applying the first tokens of the plurality of frames to at least one of the plurality of second modules, and obtaining second tokens of the plurality of frames on which the spatio-temporal attention is performed;
   applying the second tokens of each of the plurality of frames to at least one of the plurality of first modules, and obtaining third tokens of each of the plurality of frames; and
   obtaining the target video comprising the reconstructed target reconstruction area, based on the third tokens of the plurality of frames.

3. The method of any one of claims 1 and 2, wherein

the inpainting model further comprises
a plurality of third modules configured to extract a feature obtained between images of neighboring frames among the plurality of frames, and
the method further comprises:

applying the second tokens of the plurality of frames to at least one of the plurality of third modules, and obtaining first feature maps of the plurality of frames comprising information about a motion existing between the images of the neighboring frames, and
the obtaining of the third tokens of each of the plurality of frames comprises obtaining the third tokens of each of the plurality of frames by applying the second tokens of each of the plurality of frames and the feature map of each of the plurality of frames to at least one of the plurality of first modules.

4. The method of any one of claims 1 to 3, wherein

the obtaining of the first feature maps of the plurality of frames comprises obtaining a first feature map of a first frame among the first feature maps of the plurality of frames, based on second tokens of the first frame among the second tokens of the plurality of frames and second tokens of a second frame that is a frame next to the first frame, and
the obtaining of the third tokens of each of the plurality of frames comprises obtaining third tokens of the first frame among the third tokens of the plurality of frames, based on at least one of the second tokens of the first frame and the first feature map of the first frame.

5. The method of any one of claims 1 to 4, wherein
the inpainting model is an artificial intelligence model that has completed

the first training, based on a single training image comprising two or more reconstructed first reconstruction areas respectively obtained from one or more of the plurality of first modules before the first training and one or more of the plurality of second modules configured to perform spatial attention on the single training image before the first training, and
the second training, based on a training video comprising two or more reconstructed second reconstruction areas respectively obtained from one or more of the plurality of first modules on which the first training is performed and one or more of the plurality of second modules on which the first training is performed.

6. The method of any one of claims 1 to 5, wherein

the inpainting model is an artificial intelligence model that has completed the second training based on at least one of a first loss function and a second loss function,
the first loss function is calculated based on an optical flow between images of neighboring frames of the training video comprising the second reconstruction area, and
the second loss function is calculated based on affine transformation being performed on the training video comprising the second reconstruction area and the training video comprising the reconstructed second reconstruction area.

7. The method of any one of claims 1 to 6, further comprising:

identifying at least one of a size of a motion of a camera that captured the target video comprising the target reconstruction area, a size of a motion of an object corresponding to the target reconstruction area, and a size of the target reconstruction area, and
wherein
the obtaining of the third tokens of each of the plurality of frames comprises selecting one of a first inferring mode and a second inferring mode, based on at least one of the size of the motion of the camera, the size of the motion of the object, and the size of the target reconstruction area, and obtaining the third tokens of each of the plurality of frames,
the first inferring mode is a mode in which the third tokens of each of the plurality of frames are obtained based on the second tokens of each of the plurality of frames and the first feature map of each of the plurality of frames, and
the second inferring mode is a mode in which the third tokens of each of the plurality of frames are obtained based on the second tokens of each of the plurality of frames.

8.  An electronic device for performing video inpainting, the electronic device comprising:

a memory storing one or more instructions; and
at least one processor configured to execute the one or more instructions stored in the memory,
wherein the at least one processor is configured to

apply a target video in which a target reconstruction area is masked and a mask video that displays the target reconstruction area to an inpainting model comprising a plurality of first modules configured to perform spatial attention based on a feature obtained from each image of a single frame of the target video and a plurality of second modules configured to perform spatio-temporal attention based on a feature obtained between images of a plurality of frames of the target video, and obtain a target video comprising the reconstructed target reconstruction area,
wherein the inpainting model is an artificial intelligence model that has completed
first training 300 with respect to the plurality of first modules 311-1, 311-2, 311-3, and 311-4 before the first training 300 and the plurality of second modules 321-1, 321-2, 321-3, and 321-4 configured to perform spatial attention on a single training image before the first training 300, and
second training 350 on the plurality of first modules 351-1, 351-2, 351-3, and 351-4 on which the first training 300 is performed and the plurality of second modules 361-1, 361-2, 361-3, and 361-4 on which the first training 300 is performed,

wherein

the first training 300 comprises training to obtain a single training image comprising a reconstructed first reconstruction area based on a single training image comprising the first reconstruction area, and
the second training 350 comprises training to obtain a training video in which a second reconstruction area is reconstructed based on a training video comprising the second reconstruction area.

9.  The electronic device of claim 8, wherein the at least one processor is configured to

obtain first tokens of the plurality of frames, based on the target video in which the target reconstruction area is masked and the mask video that displays the target reconstruction area,
apply the first tokens of the plurality of frames to at least one of the plurality of second modules, and obtain second tokens of the plurality of frames on which the spatio-temporal attention is performed,
apply the second tokens of each of the plurality of frames to at least one of the plurality of first modules, and obtain third tokens of each of the plurality of frames, and
obtain the target video comprising the reconstructed target reconstruction area, based on the third tokens of the plurality of frames.

10. The electronic device of any one of claims 8 and 9, wherein

the inpainting model further comprises a plurality of third modules configured to extract a feature obtained between images of neighboring frames among the plurality of frames, and
the at least one processor is configured to
apply the second tokens of the plurality of frames to at least one of the plurality of third modules, and obtain first feature maps of the plurality of frames comprising information about a motion existing between the images of the neighboring frames, and
obtain the third tokens of each of the plurality of frames by applying the second tokens of each of the plurality of frames and the feature map of each of the plurality of frames to at least one of the plurality of first modules.

11. The electronic device of any one of claims 8 to 10, wherein the at least one processor is configured to

obtain a first feature map of a first frame among the first feature maps of the plurality of frames, based on second tokens of the first frame among the second tokens of the plurality of frames and second tokens of a second frame that is a frame next to the first frame, and
obtain third tokens of the first frame among the third tokens of the plurality of frames, based on at least one of the second tokens of the first frame and the first feature map of the first frame.

12. The electronic device of any one of claims 8 to 11, wherein
the inpainting model is an artificial intelligence model that has completed

the first training, based on a single training image comprising two or more reconstructed first reconstruction areas respectively obtained from one or more of the plurality of first modules before the first training and one or more of the plurality of second modules configured to perform spatial attention on the single training image before the first training, and
the second training, based on a training video comprising two or more reconstructed second reconstruction areas respectively obtained from one or more of the plurality of first modules on which the first training is performed and one or more of the plurality of second modules on which the first training is performed.

13. The electronic device of any one of claims 8 to 12, wherein

the inpainting model is an artificial intelligence model that has completed the second training based on at least one of a first loss function and a second loss function,
the first loss function is calculated based on an optical flow between images of neighboring frames of the training video comprising the second reconstruction area, and
the second loss function is calculated based on affine transformation being performed on the training video comprising the second reconstruction area and the training video comprising the reconstructed second reconstruction area.

14. The electronic device of any one of claims 8 to 13, wherein
the at least one processor is configured to

identify at least one of a size of a motion of a camera that captured the target video comprising the target reconstruction area, a size of a motion of an object corresponding to the target reconstruction area, and a size of the target reconstruction area, and
select one of a first inferring mode and a second inferring mode, based on at least one of the size of the motion of the camera, the size of the motion of the object, and the size of the target reconstruction area, and obtain the third tokens of each of the plurality of frames, and
the first inferring mode is a mode in which the third tokens of each of the plurality of frames are obtained based on the second tokens of each of the plurality of frames and the first feature map of each of the plurality of frames, and
the second inferring mode is a mode in which the third tokens of each of the plurality of frames are obtained based on the second tokens of each of the plurality of frames.

15. A computer-readable recording medium having recorded thereon a program for performing the method of any one of claims 1 to 7, on a computer.

# FIG. 1

# FIG. 2

START

OBTAIN FIRST TOKENS OF PLURALITY OF FRAMES,
BASED ON TARGET VIDEO IN WHICH TARGET RECONSTRUCTION
AREA IS MASKED AND MASK VIDEO THAT
DISPLAYS TARGET RECONSTRUCTION AREA — S210

APPLY FIRST TOKENS OF PLURALITY OF FRAMES TO AT LEAST
ONE OF PLURALITY OF SECOND MODULES, AND THUS,
OBTAIN SECOND TOKENS OF PLURALITY OF FRAMES ON WHICH
TEMPORAL ATTENTION IS PERFORMED — S220

APPLY SECOND TOKENS OF EACH OF PLURALITY OF
FRAMES TO AT LEAST ONE OF PLURALITY OF FIRST MODULES,
AND THUS, OBTAIN THIRD TOKENS OF EACH OF PLURALITY OF
FRAMES ON WHICH SPATIAL ATTENTION IS PERFORMED — S230

OBTAIN TARGET VIDEO INCLUDING TARGET
RECONSTRUCTION AREA RECONSTRUCTED BASED ON
THIRD TOKENS OF PLURALITY OF FRAMES — S240

END

# FIG. 3

# FIG. 4A

# FIG. 4B

# FIG. 5A

# FIG. 5B

EP 4 600 895 A1

FIG. 6

FIG. 7

# FIG. 8A

× L groups (=number of heads)

800-1

810

XL

801

Tokenization

$a_t$

820

XL

$MC_t$

Attended
Tokens

Concatenate

FFN

Motion Clue
Tokens — 821

Mixed Tokens
830-1

Elem-wise product

⊙

Attended
Tokens

Weighted Motion
Tokens — 840-1

XL

$a'_t$

850-1

EP 4 600 895 A1

# FIG. 8B

× L groups (=number of heads)

800-2

810

$a_t$

XL

802

De-tokenization

Attended Features — 811

Concatenate

Attended Features

801

820

$MC_t$

XL

a Motion Clue

822

FFN

Mixed Features

830-2

Elem-wise product

Weighted Motion Features

840-2

845

Tokenization

$a'_t$

XL

850-2

EP 4 600 895 A1

**FIG. 9A**

# FIG. 9B

# FIG. 9C

EP 4 600 895 A1

FIG. 10

FIG. 11A

EP 4 600 895 A1

FIG. 11B

EP 4 600 895 A1

**FIG. 11C**

# FIG. 12

```
                    ┌─────────┐
                    │  START  │
                    └─────────┘
                         │
                         ▼
    ┌──────────────────────────────────────┐
    │  CALCULATE ESTIMATED TRAINING TIME,   │── S1210
    │     BASED ON TEST TRAINING VIDEO      │
    └──────────────────────────────────────┘
                         │
                         ▼
    ┌──────────────────────────────────────┐
    │        OUTPUT INFORMATION ABOUT       │── S1220
    │        CALCULATED TRAINING TIME       │
    └──────────────────────────────────────┘
                         │
                         ▼
    ┌──────────────────────────────────────┐
    │          RECEIVE USER INPUT OF        │── S1230
    │        SELECTING TRAINING MODE        │
    └──────────────────────────────────────┘
                         │
                         ▼
    ┌──────────────────────────────────────┐
    │  PERFORM TRAINING OF INPAINTING MODEL,│
    │   IN TRAINING MODE CORRESPONDING TO   │── S1240
    │          RECEIVED USER INPUT          │
    └──────────────────────────────────────┘
                         │
                         ▼
                    ┌─────────┐
                    │   END   │
                    └─────────┘
```

FIG. 13A

FIG. 13B

EP 4 600 895 A1

# FIG. 14

```
                    ( START )
                        |
                        v
    ┌───────────────────────────────────────┐
    │     RECEIVE USER INPUT OF DESIGNATING  │
    │    TARGET OBJECT INCLUDED IN IMAGE OF  │ ─── S1410
    │    PARTICULAR FRAME OF TARGET VIDEO    │
    └───────────────────────────────────────┘
                        |
                        v
    ┌───────────────────────────────────────┐
    │  GENERATE IMAGE OF PARTICULAR FRAME WHICH │
    │      INCLUDES MASK CORRESPONDING TO    │ ─── S1420
    │  TARGET OBJECT, BASED ON USER INPUT OF │
    │       DESIGNATING TARGET OBJECT        │
    └───────────────────────────────────────┘
                        |
                        v
    ┌───────────────────────────────────────┐
    │     PROPAGATE MASK INCLUDED IN IMAGE OF │
    │  PARTICULAR FRAME TO IMAGE OF PLURALITY OF │
    │     FRAMES OF TARGET VIDEO, AND THUS,  │ ─── S1430
    │  GENERATE TARGET VIDEO INCLUDING MASK  │
    │      CORRESPONDING TO TARGET OBJECT    │
    └───────────────────────────────────────┘
                        |
                        v
    ┌───────────────────────────────────────┐
    │    APPLY TARGET VIDEO INCLUDING MASK TO │
    │ INPAINTING MODEL, AND THUS, OBTAIN TARGET │ ─── S1440
    │    VIDEO FROM WHICH MASK IS REMOVED    │
    └───────────────────────────────────────┘
                        |
                        v
                     ( END )
```

# FIG. 15

```
            ( START )
               │
               ▼
┌─────────────────────────────────┐
│   RECEIVE USER INPUT OF DESCRIBING   │── S1510
│  TARGET OBJECT INCLUDED IN TARGET VIDEO │
└─────────────────────────────────┘
               │
               ▼
┌─────────────────────────────────┐
│  OBTAIN MASK VOLUME CORRESPONDING TO  │── S1520
│  TARGET OBJECT, BASED ON USER INPUT OF │
│      DESCRIBING TARGET OBJECT      │
└─────────────────────────────────┘
               │
               ▼
┌─────────────────────────────────┐
│  GENERATE TARGET VIDEO INCLUDING MASK  │── S1530
│    CORRESPONDING TO TARGET OBJECT,    │
│   BASED ON OBTAINED MASK VOLUME     │
└─────────────────────────────────┘
               │
               ▼
┌─────────────────────────────────┐
│   APPLY TARGET VIDEO INCLUDING MASK TO  │── S1540
│ INPAINTING MODEL, AND THUS, OBTAIN TARGET │
│   VIDEO FROM WHICH MASK IS REMOVED    │
└─────────────────────────────────┘
               │
               ▼
             ( END )
```

# FIG. 16

START

RECEIVE USER INPUT OF DESCRIBING TARGET OBJECT INCLUDED IN PARTICULAR FRAME OF TARGET VIDEO — S1610

GENERATE MASK CORRESPONDING TO TARGET OBJECT, BASED ON USER INPUT OF DESCRIBING TARGET OBJECT — S1620

GENERATE IMAGE OF PARTICULAR FRAME INCLUDING MASK CORRESPONDING TO TARGET OBJECT, BASED ON GENERATED MASK — S1630

PROPAGATE MASK INCLUDED IN IMAGE OF PARTICULAR FRAME TO IMAGE OF PLURALITY OF FRAMES OF TARGET VIDEO, AND THUS, GENERATE TARGET VIDEO INCLUDING MASK CORRESPONDING TO TARGET OBJECT — S1640

APPLY, TO INPAINTING MODEL, TARGET VIDEO INCLUDING MASK CORRESPONDING TO THE TARGET OBJECT, AND THUS, OBTAIN TARGET VIDEO FROM WHICH MASK IS REMOVED — S1650

END

# FIG. 17

START

RECEIVE USER INPUT OF DESIGNATING TARGET
OBJECT IN STREAMING VIRTUAL REALITY — S1710

STREAM VIRTUAL REALITY INCLUDING MASK
CORRESPONDING TO TARGET OBJECT,
BASED ON RECEIVED USER INPUT — S1720

RECEIVE USER INPUT OF
SELECTING VIRTUAL REALITY INPAINTING SCENARIO — S1730

PERFORM INPAINTING CORRESPONDING TO
VIRTUAL REALITY INPAINTING SCENARIO SELECTED
BY USER INPUT, BY APPLYING STREAMING VIRTUAL
REALITY INCLUDING MASK TO INPAINTING MODEL — S1740

STREAM VIRTUAL REALITY IN WHICH
INPAINTING IS PERFORMED — S1750

END

# FIG. 18

## INTERNATIONAL SEARCH REPORT

| International application No. |
| --- |
| **PCT/KR2023/016890** |

| | |
| --- | --- |
| **A. CLASSIFICATION OF SUBJECT MATTER** | |

**G06T 5/00**(2006.01)i; **G06T 5/20**(2006.01)i; **G06T 7/20**(2006.01)i; **G06T 3/00**(2006.01)i; **G06T 7/11**(2017.01)i; **G06N 3/045**(2023.01)i; **G06N 3/0455**(2023.01)i; **G06T 7/215**(2017.01)i

According to International Patent Classification (IPC) or to both national classification and IPC

**B. FIELDS SEARCHED**

Minimum documentation searched (classification system followed by classification symbols)

G06T 5/00(2006.01); G06N 3/08(2006.01); G06T 3/00(2006.01); G06T 7/194(2017.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 비디오 인페인팅(video inpainting), 공간적 어텐션(spatial attention), 시-공간적 어텐션(spatial-temporal attention), 인공지능모델(artificial intelligence model), 토큰(token), 마스킹(masking)

**C. DOCUMENTS CONSIDERED TO BE RELEVANT**

| Category* | Citation of document, with indication, where appropriate, of the relevant passages | Relevant to claim No. |
| --- | --- | --- |
| A | LIU, Rui et al. Decoupled Spatial-Temporal Transformer for Video Inpainting. arXiv:2104.06637v1. pp. 1-10, 14 April 2021. [Retrieved on 16 January 2024]. Retrieved from <URL:https://arxiv.org/pdf/2104.06637.pdf>. See page 5. | 1-15 |
| A | KR 10-2021-0029089 A (SAMSUNG ELECTRONICS CO., LTD.) 15 March 2021 (2021-03-15) See paragraphs [0024]-[0025], [0082] and [0086]; and figure 3. | 1-15 |
| A | KR 10-2018-0134563 A (FOUNDATION OF SOONGSIL UNIVERSITY-INDUSTRY COOPERATION) 19 December 2018 (2018-12-19) See paragraphs [0028]-[0029]. | 1-15 |
| A | KR 10-2021-0053675 A (LG ELECTRONICS INC.) 12 May 2021 (2021-05-12) See paragraphs [0166]-[0169]. | 1-15 |
| A | US 2022-0284552 A1 (LEMON INC.) 08 September 2022 (2022-09-08) See claim 1. | 1-15 |

☐ Further documents are listed in the continuation of Box C.     ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **26 January 2024** | **07 February 2024** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/016890**

| Patent document cited in search report | | | Publication date (day/month/year) | Patent family member(s) | | | Publication date (day/month/year) |
|---|---|---|---|---|---|---|---|
| KR | 10-2021-0029089 | A | 15 March 2021 | CN | 112449141 | A | 05 March 2021 |
| | | | | US | 11526970 | B2 | 13 December 2022 |
| | | | | US | 2021-0065340 | A1 | 04 March 2021 |
| KR | 10-2018-0134563 | A | 19 December 2018 | KR | 10-2006064 | B1 | 31 July 2019 |
| | | | | US | 10497166 | B2 | 03 December 2019 |
| | | | | US | 2018-0357813 | A1 | 13 December 2018 |
| KR | 10-2021-0053675 | A | 12 May 2021 | US | 11004257 | B1 | 11 May 2021 |
| | | | | US | 2021-0134050 | A1 | 06 May 2021 |
| US | 2022-0284552 | A1 | 08 September 2022 | US | 11625814 | B2 | 11 April 2023 |

Form PCT/ISA/210 (patent family annex) (July 2022)